**Europäisches Patentamt**

**European Patent Office**

**Office européen des brevets**

(19)

(11) Veröffentlichungsnummer : **0 437 418 B1**

(12) # EUROPÄISCHE PATENTSCHRIFT

(45) Veröffentlichungstag der Patentschrift :
**11.11.92 Patentblatt 92/46**

(51) Int. Cl.[5] : **E06B 3/66,** B60J 1/00,
B65G 49/06

(21) Anmeldenummer : **91890002.8**

(22) Anmeldetag : **09.01.91**

(54) **Anlage zur Herstellung von Isolierglasscheiben.**

(30) Priorität : **11.01.90 AT 53/90**

(43) Veröffentlichungstag der Anmeldung :
**17.07.91 Patentblatt 91/29**

(45) Bekanntmachung des Hinweises auf die
Patenterteilung :
**11.11.92 Patentblatt 92/46**

(84) Benannte Vertragsstaaten :
**CH DE ES FR IT LI SE**

(56) Entgegenhaltungen :
**EP-A- 0 111 206**
**EP-A- 0 136 432**
**EP-A- 0 334 721**

(56) Entgegenhaltungen :
**WO-A-90/02696**
**DE-A- 2 309 295**
**DE-A- 2 834 902**
**DE-A- 3 322 800**
**DE-A- 3 818 631**
**GB-A- 2 016 960**

(73) Patentinhaber : **Lisec, Peter**
**Bahnhofstrasse 34**
**A-3363 Amstetten-Hausmening (AT)**

(72) Erfinder : **Lisec, Peter**
**Bahnhofstrasse 34**
**A-3363 Amstetten-Hausmening (AT)**

(74) Vertreter : **Beer, Manfred, Dipl.-Ing. et al**
**Lindengasse 8**
**A-1070 Wien (AT)**

EP 0 437 418 B1

**Beschreibung**

Die Erfindung betrifft eine Anlage zur Herstellung von Isolierglasscheiben aus wenigstens zwei nach wenigstens einer Richtung gekrümmten Glasscheiben, insbesondere Isolierglas für Fenster von kraftfahrzeugen.

Anlagen zur Herstellung von Isolierglas sind in verschiedenen Ausführungsformen bekannt. Als Beispiel für eine solche Anlage wird auf die EP-A-252 066 mit weiteren Literaturhinweisen verwiesen.

Üblicherweise besitzen solche Anlagen zur Herstellung von Isolierglas eine Vorrichtung zum Reinigen der Glastafeln, eine Vorrichtung, in der von Hand aus oder automatisch Abstandhalterrahmen aus Metallprofilen oder aus Kunststoff (Swiggle-Strip) auf die eine Glasscheibe aufgesetzt werden, eine Station zum Zusammenbau der Isolierglasscheiben, in der eine Glasscheibe auf den auf die erste Glasscheibe angesetzten Abstandhalter angelegt wird, eine Presse, die für gewöhnlich als Plattenpresse ausgebildet ist, und schließlich eine Station, in der die nach außen offene Randfuge zwischen den beiden Glasscheiben, die nach innen vom Abstandhalter begrenzt wird, mit einer Dichtmasse (Versiegelungsmasse) gefüllt wird. Die Glasscheiben werden in den bekannten Anlagen in der Regel im wesentlichen vertikal stehend von Fördereinrichtungen transportiert. Diese Fördereinrichtungen sind für gewöhnlich Rollen- oder Bandförderer und die Glasscheiben lehnen gegen seitliche als Rollen- oder Luftkissenwände ausgerichtete Abstützungen.

Aus der EP-A-176 388 ist es auch bekannt, auf den Rand einer Glasscheibe einen Kunststoffstrang aufzuspritzen, der als Abstandhalter für das Isolierglas dienen soll.

Alle bekannten Vorrichtungen sind für die Behandlung ebener Glasscheiben unterschiedlicher Größe und unterschiedlichen Zuschnitts ausgelegt und sind insbesondere mangels geeigneter Fördersysteme für die Herstellung von Isolierglasscheiben aus gekrümmten Glasscheiben nicht geeignet.

Isolierglas bestehend aus zwei zueinander parallelen, gekrümmten oder gewölbten Glasscheiben ist in zunehmendem Ausmaß für die Verwendung in Kraftfahrzeugfenstern als Windschutzscheibe, Heckscheibe und Seitenscheiben vorgesehen, da seine guten thermisch isolierenden und schallisolierenden Eigenschaften auch im Kraftfahrzeugbau von Interesse sind.

Die Verwendung von üblichen vorgefertigten oder aus Metall bestehenden Abstandhalterrahmen ist wegen der geringen Stärken des für Kraftfahrzeugfenster vorgesehenen Scheibenpaketes nicht möglich.

Ein weiteres Problem bei der Verarbeitung nach wenigstens einer Richtung gekrümmter Glasscheiben besteht darin, daß der Randbereich solcher Glasscheiben mehr oder weniger stark wellig ist, d.h. nach oben oder nach unten aus seiner Solllage abweicht. Darüber hinaus ergeben sich durch die verschiedenen Zuschnittformen für solche gekrümmten oder gewölbten Scheiben, die meist erst gebogen werden, nachdem sie zugeschnitten worden sind, unterschiedliche Höhenlagen ihrer Ränder. Die beschriebene Welligkeit des Randes solcher Glasscheiben ist auch eine Folge des thermischen Härtungsvorganges der Glasscheiben, die für Kraftfahrzeugfenster bestimmt sind, unterworfen werden.

Ein weiteres Problem bei der Handhabung von nach wenigstens einer Richtung gewölbten Glasscheiben ist es, daß sich diese in den bekannten Vorrichtungen nur schwer genau ausgerichtet transportieren und insbesondere positionieren lassen, was für die weitere Bearbeitung von entscheidender Bedeutung ist. Die für das Festlegen von Glasscheiben üblicherweise verwendeten Vakuumsauger mit nachgiebigen Dichtlippen sind für die genaue Positionierung gekrümmter oder gewölbter Glasscheiben nur bedingt geeignet, da die Dichtlippen beim Ansaugen nachgeben und so auch die Glasscheibe selbst verschoben wird.

Der Erfindung liegt die Aufgabe zugrunde, eine Anlage zur Herstellung von gekrümmten oder gewölbten Isolierglasscheiben anzugeben, die besonders für Fenster von Fahrzeugen, wie Kraftfahrzeugen oder Schienenfahrzeugen geeignet sind.

Erfindungsgemäß ist eine Anlage der eingangs genannten Gattung gekennzeichnet durch eine Station zum Auftragen eines als Abstandhalter dienenden Kunststoffstranges, eine Station zum Auftragen einer Dichtmasse parallel zum Abstandhalter, die gegebenenfalls mit der zuvor genannten Station kombiniert ist, eine Station zum Zusammenbau, eine Station zum Verpressen des zusammengesetzten Scheibenpaketes, und durch eine Fördereinrichtung zum Fördern der Glasscheiben durch die Stationen der Anlage, welche Fördereinrichtung insbesondere auf Schienen verfahrbare Träger für die Glasscheibe aufweist, die auf ihrer der Glasscheibe zugewandten Stützfläche annähernd der Form der Glasscheibe entsprechend gekrümmt und mit Einrichtungen zum Festlegen der Glasscheibe ausgerüstet sind.

Eine der Besonderheiten der erfindungsgemäßen Anlage besteht darin, daß die Versiegelungsmasse gleichzeitig oder unmittelbar nach dem Auftragen des Abstandhalters auf die Glasscheibe neben und außerhalb des als Abstandhalter dienenden Stranges aufgetragen wird, also noch bevor die Isolierglasscheibe zusammengestellt wird. Durch diese Maßnahme werden die Schwierigkeiten vermieden, die sich ergeben könnten, wenn in die schmale Randfuge zwischen den Glasscheiben eine Dichtmasse (Versiegelungsmasse) mit hinreichender Präzision und hinreichend vollständiger Füllung der Randfuge einzubringen ist. Dabei ist zu bedenken, daß eine mechanische Abtastung der Tiefe der Randfuge nicht möglich ist, wenn der Abstandhalter nicht aus Metall besteht.

Ein weiteres vorteilhaftes Merkmal der erfindungsgemäßen Anlage sind die Träger, die für den Transport der Glasscheiben bzw. der Scheibenpakete in der erfindungsgemäßen Anlage vorgesehen sind. Dadurch, daß die Träger eine annähernd an die Krümmung bzw. Wölbung der Glasscheiben angepaßte Form besitzen, vorzugsweise sind sie etwas weniger stark gekrümmt oder gewölbt als die Glasscheibe, ergibt sich ein sicherer Sitz der Glasscheiben bzw. Scheibenpakete auf den Trägern, ohne daß die Nachteile der federnden Dichtlippen der bekannten Saugköpfe auftreten.

Um den Rand der auf den Trägern festgelegten Glasscheiben für die Bearbeitung zugänglich zu halten, ist es bevorzugt, daß die Träger kleiner sind als die von ihnen gehaltenen Glasscheiben, so daß die Glasscheiben über den Rand des Trägers vorstehen.

Das Festlegen der Glasscheiben auf den Trägern erfolgt bevorzugt mit Unterdruckeinrichtungen, mit welchen die Träger ausgestattet sind.

In einer bevorzugten Ausführungsform der Erfindung ist vorgesehen, daß vor der Station zum Auftragen des Abstandhalters eine Station vorgesehen ist, in der aus einer Waschmaschine kommende Glasscheiben auf einen Träger der Fördereinrichtung aufgesetzt und genau ausgerichtet festgelegt werden. Dabei kann gemäß einer Variante der Erfindung vorgesehen sein, daß die Glasscheiben von einem mit einem Sauggreifer ausgestatteten Roboter beim Austritt aus der Waschmaschine erfaßt und auf den Träger aufgelegt werden. Anstelle eines mit Saugern bestückten Roboters, der die Glasscheiben am Ausgang der Waschmaschine erfaßt und auf den Träger ablegt, kann auch eine Vorrichtung vorgesehen sein, die an wenigstens zwei einander gegenüberliegenden Rändern der Glasscheibe anlegbare, beispielsweise hakenförmige Greiforgane aufweist. Auf diese Weise sind Abdrücke von Saugnäpfen auf den später im Inneren der Isolierglasscheiben liegenden Flächen der Glasscheiben vermieden.

Das Ausrichten der Glasscheiben auf den Trägern gestaltet sich besonders einfach und genau, wenn die Station mit wenigstens drei, vorzugsweise mehr als drei Positionierschiebern ausgestattet ist, welche die Glasscheibe gegenüber dem Träger ausrichten, bevor sie am Träger festgelegt wird.

Für die genaue Ausrichtung der Glasscheibe in den weiteren Stationen, insbesondere auch in der Station zum Auftragen des Abstandhalters sind erfindungsgemäß wenigstens zwei Anschläge zum genau ausgerichteten Anhalten der Glasscheibe in der jeweiligen Station vorgesehen. Diese Anschläge können am Rand der Glasscheibe oder an Gegenanschlägen am Träger angreifen.

In einer einfachen Ausführungsform der erfindungsgemäßen Anlage ist vorgesehen, daß die Düse zum Auftragen des Abstandhalters an einem Schlitten gehalten ist, der längs einer quer zu ihrer Längserstreckung verfahrbaren Brücke verstellbar ist. Diese Schlitten, die an verfahrbaren Brücken beweglich gehaltert sind, sind im Prinzip aus Glasschneidemaschinen bekannt.

Eine besonders einfache Anpassung an beliebige Scheibenformate und Zuschnitte ergibt sich, wenn vorgesehen ist, daß die Spritzdüse nach mehreren Freiheitsgraden bewegbar ist, wobei die Freiheitsgrade die Verschiebbarkeit der Brücke, die Verstellbarkeit des Schlittens entlang der Brücke, die Verdrehung der Düse um eine zur Glasfläche senkrechte Achse, die Verstellbarkeit der Halterung der Düse senkrecht zur Achse (Grobeinstellung) und die Verstellbarkeit der Düse gegenüber ihrer Halterung (Feineinstellung) sind.

Die Düse zum Auftragen des Abstandhalters unmittelbar auf dem Rand der Glasscheibe gleiten zu lassen verbietet sich, da durch das Gleiten der Düse an der Glasscheibe, sowohl die Glasscheibe als auch die Düse selbst beschädigt würden und eine erhöhte Reibung aufträte. Dabei ist darauf hinzuweisen, daß die Beschädigung der wie für Kraftfahrzeugfensterscheiben üblich, gehärteten Glasscheiben, zu einem vorzeitigen Bruch derselben führen kann.

Die Erfindung betrifft weiters eine Ausführungsform, mit der Kunststoff zur Bildung eines gleichmäßig dicken und gleichmäßig breiten Stranges, der als Abstandhalter bzw. Dichtmasse dient, auf wenigstens nach einer Richtung gekrümmte Glasscheiben aufgebracht werden kann.

Aus der EP-A-176 388 ist eine Vorrichtung zum Auftragen eines Kunststoffstranges auf eine Glasscheibe bekannt. Die bekannte Vorrichtung besitzt keine der Düse funktionell zugeordnete Einrichtung, durch welche diese allfälligen Unebenheiten der Glastafel folgend gesteuert wird. Vielmehr ist der Antrieb für das Zustellen der Düse auf die Glastafel zu nicht so ausgelegt, daß er die Düse während des Auftragens der plastischen Masse senkrecht zur Glastafel bewegt. Es sind bloß Maßnahmen getroffen, die Düse entsprechend der Dicke der Glastafel mehr oder weniger weit vorzuschieben.

Aus der DE-AS 2 601 030 ist es bekannt, eine Düse zum Auftragen von Strängen aus Kittmasse mit einem Plättchen auszustatten, das auf dem Werkstück gleitet, auf das der Strang aufzutragen ist. Dadurch soll erreicht werden, daß "etwaige kleine, durch Unregelmäßigkeiten der Tafel gebildete Hindernisse überwunden werden, ohne daß die Düse mit der Tafel in Berührung kommt". Die bekannte Konstruktion geht von einer starren Verbindung zwischen dem "Plättchen" und der Düse aus.

Diese Ausführungsform zeichnet sich dadurch, daß in Bewegungsrichtung gesehen vor der Düse eine Einrichtung zum Messen des Abstandes zwischen der Halterung der Düse und der Fläche der Glasscheibe, beispielsweise ein auf der Fläche der Glasscheibe anliegender Tastfinger vorgesehen ist, die den Antrieb zum Verstellen der Düse senkrecht zur Fläche der Glasscheibe derart steuert, daß die Düse jeweils in einem vorbestimmten Abstand über der Fläche, auf welche die Masse aufzutragen ist, angeordnet ist.

Bei dieser Ausführungsform der Erfindung ist vorgesehen, daß - z.B. durch den Tastfinger - der Abstand zwischen der Glasscheibe und der Halterung für die Düse gemessen und die Düse von einem Antrieb entsprechend dem Ergebnis dieser Messung gegenüber ihrer Halterung verstellt wird. Dabei wird die Halterung - im Normalfall - nicht senkrecht zur Glasscheibe verstellt. Durch diese Ausführung der erfindungsgemäßen Vorrichtung bleibt der Abstand der Düse von dem tafelförmigen Gegenstand konstant, ohne daß auf die Oberseite des tafelförmigen Gegenstandes nennenswerte Kräfte einwirken - anders als bei der DE-AS 26 01 030, wo die gesamte Kraft für das Bewegen der Düse vom "Plättchen" aufgebracht werden muß.

Mit der erfindungsgemäßen Vorrichtung ist es möglich, die Düse ganz knapp (z.B. 0,5 mm) über den Rand der Glasscheibe zu führen, ohne daß diese die Glasscheibe berührt, wenn diese in ihrem Randbereich nach oben gekrümmt ist, d.h. aus ihrer Ideallage nach oben abweicht. Anderseits folgt die Düse bei der erfindungsgemäßen Vorrichtung dem Randbereich, auch wenn dieser nach unten gekrümmt ist, d.h. von seiner Ideallage nach unten abweicht. Es versteht sich, daß mit der erfindungsgemäßen Vorrichtung auch solche Änderungen der Lage des Randes des tafelförmigen Gegenstandes in Richtung der Verstellbarkeit der Düse ohne Schwierigkeiten berücksichtigt werden können (der Abstand der Düse von der Fläche bleibt konstant), die sich durch die Krümmung oder Wölbung von tafelförmigen Gegenständen (Glasscheiben) in Verbindung mit einer unregelmäßigen Umrißform ergeben.

Die erfindungsgemäße Steuerung der Bewegung der Düse senkrecht zur Glastafel erlaubt es auch, die Menge an plastischer Masse über vom "Tastfinger" abgegebene Signale z.B. so zu regeln, daß in Bereichen konkav gewölbter Abschnitte mehr plastische Masse und in Bereichen konvex gekrümmter Abschnitte weniger Masse aufgetragen wird. So kann eine im wesentlichen gerade bzw. ebene Oberseite des Stranges an plastischer Masse erzielt werden.

Bei Verwendung der erfindungsgemäßen Vorrichtung ist es möglich, einen als Abstandhalter dienenden Strang auf Glasscheiben aufzutragen, die zu Isolierglasscheiben für Kraftfahrzeugfenster weiterverarbeitet werden. Für gewöhnlich besteht in diesem Fall der als Abstandhalter aufgebrachte Strang aus Butylkautschuk, in den hygroskopisches Material eingearbeitet worden ist.

Mit der erfindungsgemäßen Vorrichtung ist es aber auch möglich, in einem weiteren oder bei Verwendung einer Doppeldüse in demselben Arbeitsgang neben dem als Abstandhalter dienenden Strang aus Butylkautschuk od.dgl. auch einen als Versiegelung dienenden Strang, vorzugsweise aus einem elastisch aushärtendem Zwei-Komponenten-Kunststoff (z.B. einem Polysulfid) aufzubringen. In diesem Fall ist es zweckmäßig, wenn der als Abstandhalter dienende Strang etwas dicker ausgebildet wird, als der als Versiegelungsmasse dienende Strang, was durch entsprechende Einstellung der Düsensteuerung (Abstand von der Fläche der Glasscheibe) aufgrund der von der Meßeinrichtung, z.B. vom Tastfinger abgegebenen Signale ohne weiteres möglich ist. Es ist aber auch möglich, einen Strang aus pastöser Masse aufzutragen, der sowohl die Funktion des Abstandhalters als auch die der Versiegelung übernimmt.

Die Meßeinrichtung, z.B. der Tastfinger gibt seine Signale an die Steuerung des Antriebes zum Verstellen bzw. Nachstellen der Düse in einer Richtung senkrecht zur Fläche der gekrümmten bzw. gewölbten Glasscheibe ab und ist hiezu beispielsweise mit einem elektronischen Meßlineal oder einer ähnlichen Vorrichtung verbunden, die seiner Stellung relativ zu seiner Halterung entsprechende Signale abgibt.

Dadurch, daß der Abstand der Düse von der Fläche, auf die der Strang aus plastischer Masse aufgetragen wird, bei der erfindungsgemäßen Vorrichtung genau konstant gehalten wird, ist es auch ohne weiteres möglich, die gewünschte und vorgegebene Breite des Kunststoffstranges einzuhalten. Hiezu wird bevorzugt die Geschwindigkeit der Bewegung der Düse entlang des Randes der Glasscheibe mengenabhängig gesteuert, wozu vorzugsweise im Bereich der Austrittsöffnung der Düse ein Sensor angeordnet ist, der die tatsächlich aus der Düse austretende Menge an plastischer Masse (Austrittsrate) erfaßt und entsprechende Signale an die Düsensteuerung abgibt, welche die Geschwindigkeit der Bewegung der Düse relativ zur Glasscheibe in Abhängigkeit von der Austrittsrate so regelt, daß auch bei Änderungen der Durchflußrate an plastischer Masse durch die Düsenöffnung je Längeneinheit des Randes des tafelförmigen Gegenstandes, z.B. der Glasscheibe, genau die gewünschte Menge an plastischer Masse aufgetragen wird.

Durch diese Maßnahmen, die ein genaues Einhalten der aufgetragenen Menge an plastischer Masse in den Strängen die als Abstandhalter und/oder als Versiegelung dienen, gewährleistet, ergibt sich auch nach dem Verpressen des Scheibenpaketes aus den zwei nach wenigstens einer Richtung gekrümmten Glasscheiben kein zum Scheibeninneren hin welliger, sondern ein glatter Rand insbesondere der als Abstandhalter aufgetragenen Masse, der zur Umrißform des tafelförmigen Gegenstandes parallel verläuft und vom Rand desselben einen gleichmäßigen Abstand besitzt.

In einer bevorzugten Ausführungsform der Erfindung ist vorgesehen, daß die Düse zum Auftragen eines im Querschnitt rechteckigen Stranges auf den Rand der Glasscheibe ausgebildet ist. Mit Vorteil ist dabei vorgesehen, daß die obere Begrenzungsfläche des Stranges um eine zur Längsrichtung des Stranges parallele Achse gekrümmt ist. So werden beim Zusammenbau und beim Verpressen der Isolierglasscheibe nachteilige Lufteinschlüsse, die bei ebenen Begrenzungsflächen auftreten könnten, zuverlässig vermieden.

Eine einfach aufgebaute Vorrichtung gemäß der Erfindung ist dadurch gekennzeichnet, daß der Tastfinger an seinem auf der Fläche der Glasscheibe anliegenden Ende eine Rolle trägt.

In der Praxis bewährt sich eine Ausführungsform der erfindungsgemäßen Vorrichtung, bei der für das Verstellen der Düse senkrecht zur Fläche der Glasscheibe zwei voneinander unabhängige Antriebe vorgesehen sind, wobei ein erster Antrieb ein an sich bekannter Antrieb zum Zustellen der Düse bis vor die Fläche der Glasscheibe ist, und der zweite Antrieb mit der Meßeinrichtung, z.B. mit dem Tastfinger wirkungsmäßig verbunden ist.

Bei dieser Ausführungsform ist mit Vorteil vorgesehen, daß die Meßeinrichtung z.B. der Tastfinger von der durch den ersten Antrieb verstellbaren Halterung der Düse getragen ist, und daß ihre Signale, die dem Abstand zwischen Halterung und Fläche der Glasscheibe bzw. Veränderungen dieses Abstandes entsprechen, an den zweiten Antrieb für die Verstellung der Düse abgegeben werden.

In einer anderen Ausführungsform der erfindungsgemäßen Vorrichtung ist vorgesehen, daß in der Station zum Auftragen einer Dichtmasse eine parallel zum Abstandhalter und - bezogen auf die Glasscheibe - außerhalb des Abstandhalters verfahrbare Düse zum Auftragen von Dichtmasse vorgesehen ist, und daß die Düse zum Aufbringen der Dichtmasse an einem Schlitten gehalten ist, der längs einer quer zu ihrer Längserstreckung verfahrbaren Brücke verstellbar ist.

Die Düse zum Auftragen der Dichtmasse kann, wie in den Unteransprüchen 15 bis 19 angegeben, mit den oben im Zusammenhang mit der Düse zum Auftragen des Abstandhalters angegebenen Vorteilen ausgebildet sein.

Es ist auch eine Ausführungsform der erfindungsgemäßen Anlage möglich, bei der in einer einzigen Vorrichtung die Düse zum Auftragen des Abstandhalters und die Düse zum Auftragen der Dichtmasse vorgesehen sind. Dabei können zwei gesonderte, beispielsweise auf zwei Schlitten an einem Balken, der selbst verfahrbar ist, verstellbare Düsen montiert sein, oder es ist, wie in einer Ausführungsform der Erfindung vorgesehen, die Düse zum Auftragen der Dichtmasse auf die Glasscheibe mit der Düse zum Auftragen des Abstandhalters zu einer Zweifachdüse kombiniert.

Bei allen vorgenannten Varianten ist eine Ausführungsform bevorzugt, wonach die Düse für das Auftragen des Abstandhalters und/oder die Düse zum Auftragen des Dichtmassenstranges zur Herstellung von Strängen mit rechtekkiger Querschnittsform ausgebildet sind, wobei der Strang, der den Abstandhalter bildet, dicker ist als der Strang aus Dichtmasse.

Gemäß einer Weiterbildung der Erfindung ist vorgesehen, daß in der Station zum Zusammenbau von zwei Glasscheiben, d.h. zum Auflegen einer Glasscheibe auf die am Träger festgelegte, mit den zwei kunststoffsträngen versehene Glasscheibe, ein Greifer vorgesehen ist, der die aufzulegende Glasscheibe, z.B. aus einem Stapel von Glasscheiben aufnimmt und auf die Kunststoffstränge ablegt, und daß nach dem Loslassen des Greifers von außen auf den Rand der am Träger festgelegten Glasscheibe zu vorschiebbare Ausrichtschieber vorgesehen sind, durch welche die aufgelegte Glasscheibe in eine die festgelegte Glasscheibe genau überdeckende Lage verschiebbar ist.

Diese Ausführungsform kann sich noch dadurch auszeichnen, daß die Ausrichtschieber vorzugsweise gleichzeitig bis in Anlage an die am Träger festgelegte Glasscheibe vorschiebbar sind und/ oder daß die Ausrichtschieber unter Auswertung der in der Glasschneidevorrichtung mit der die Glasscheibe hergestellt worden ist, gespeicherten Daten für die Umrißform der Glasscheibe gesteuert sind.

Nach einer weiteren Ausführungsform der Erfindung ist vorgesehen, daß in der Station zum Verpressen des Paketes aus übereinandergelegten Glasscheiben ein entlang des Randes der Glasscheiben verfahrbares, mit wenigstens zwei einander gegenüberliegenden, aufeinander zu belastbaren und von beiden Seiten her an das Scheibenpaket anlegbaren Druckrollen versehenes Werkzeug vorgesehen ist. Bei dieser Ausführungsform bewährt es sich ganz besonders, daß der Träger nach jeder Richtung kleiner ist als die auf ihm festgelegte Glasscheibe, so daß die Druckrollen von beiden Seiten her an das Scheibenpaket angelegt werden können. Um die Preßvorrichtung entlang des Randes des Scheibenpaketes führen zu können, kann vorgesehen sein, daß das Werkzeug an einem Schlitten montiert ist, der auf einer quer zu ihrer Längserstreckung verfahrbaren Brücke verstellbar geführt ist und daß die Druckrollen am Schlitten um eine zur Fläche der Glasscheiben etwa senkrechte Achse verdrehbar sind.

Alle Bewegungsabläufe von Bearbeitungswerkzeugen (Düsen zum Auftragen des Abstandhalters, Düsen zum Auftragen der Versiegelungsmasse und das Werkzeug mit den beiden Rollen zum Verpressen der zusammengestellten Glasscheiben) sowie die Steuerung der Bewegungen der Positionierschieber und der Ausrichtschieber können unter Auswertung der in der Glasschneidevorrichtung, mit der die zur gekrümmten oder gewölbten Isolierglasscheibe zusammengesetzten Glasscheiben hergestellt worden sind, gespeicherten Daten für die Umrißform der Glasscheiben gesteuert werden.

Weitere Einzelheiten und Merkmale der Erfindung ergeben sich aus der nachstehenden Beschreibung der in den Zeichnungen schematisch dargestellten Ausführungsformen einer erfindungsgemäßen Anlage.

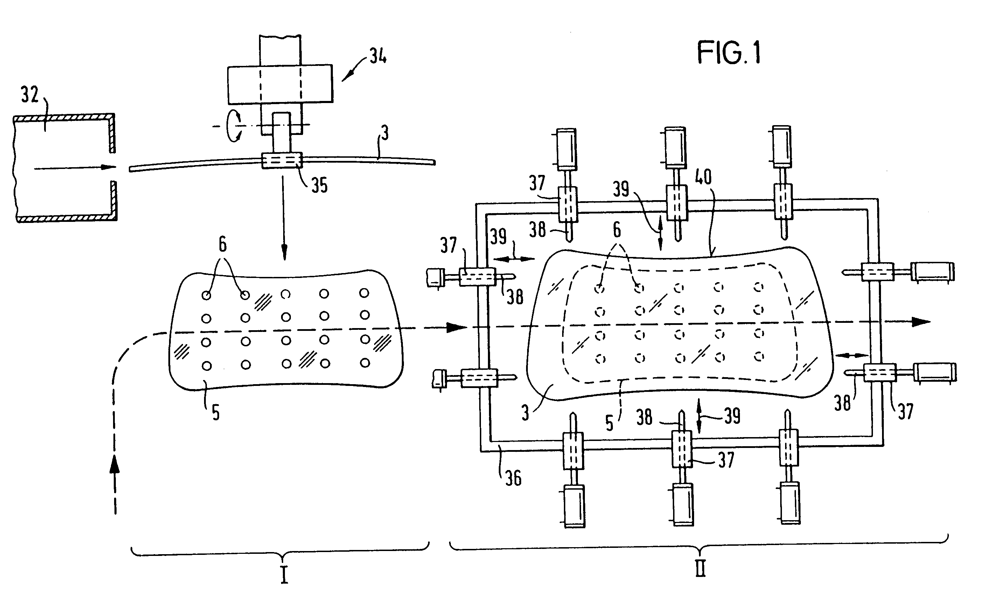

Es zeigt: Fig. 1 schematisch und in Draufsicht eine Station I zum Auflegen von gewölbten Glasscheiben auf Träger und eine Station II zum Ausrichten der Glasscheiben auf dem Träger,

Fig. 1' eine andere Ausführungsform der Station I,

Fig. 2 eine Station III zum Auftragen eines als Abstandhalter dienenden Kunststoffstranges und eine Station IV zum Auftragen eines Stranges aus Dichtmasse,

Fig. 3 ein Ausführungsbeispiel für eine in den Stationen III und IV verwendbaren Düse,

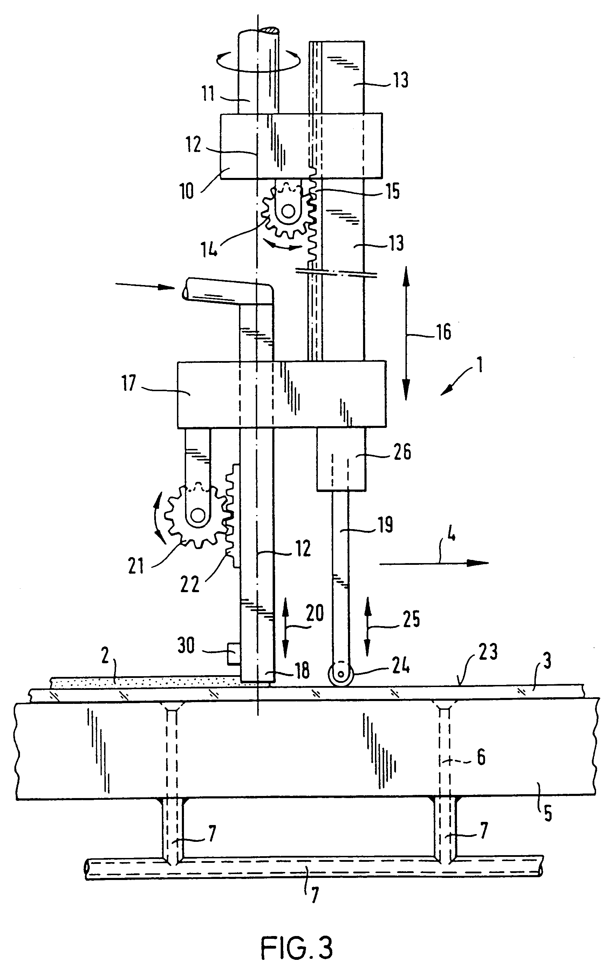

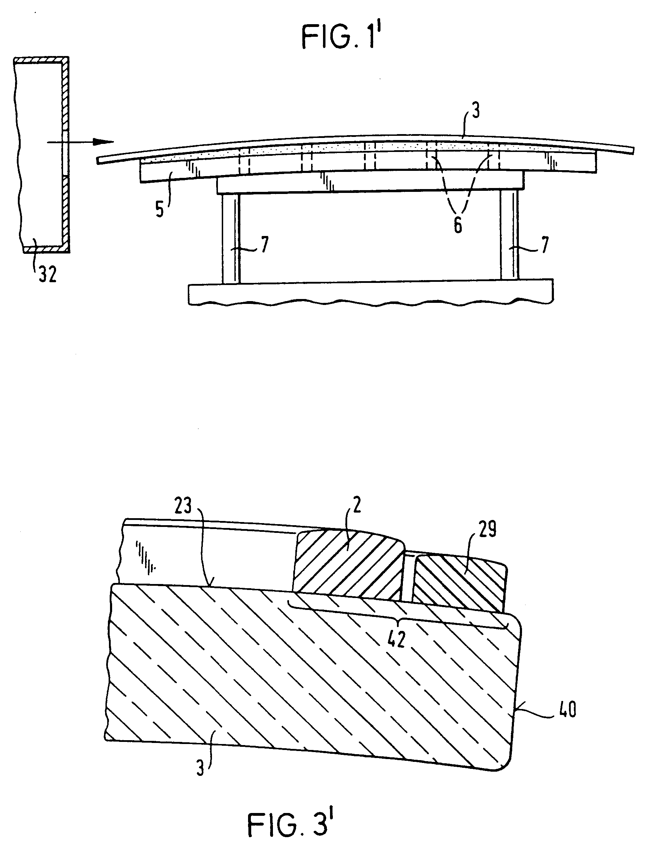

Fig. 3' eine Glasscheibe (teilweise) mit zwei aufgetragenen Strängen (Abstandhalter und Dichtmasse),

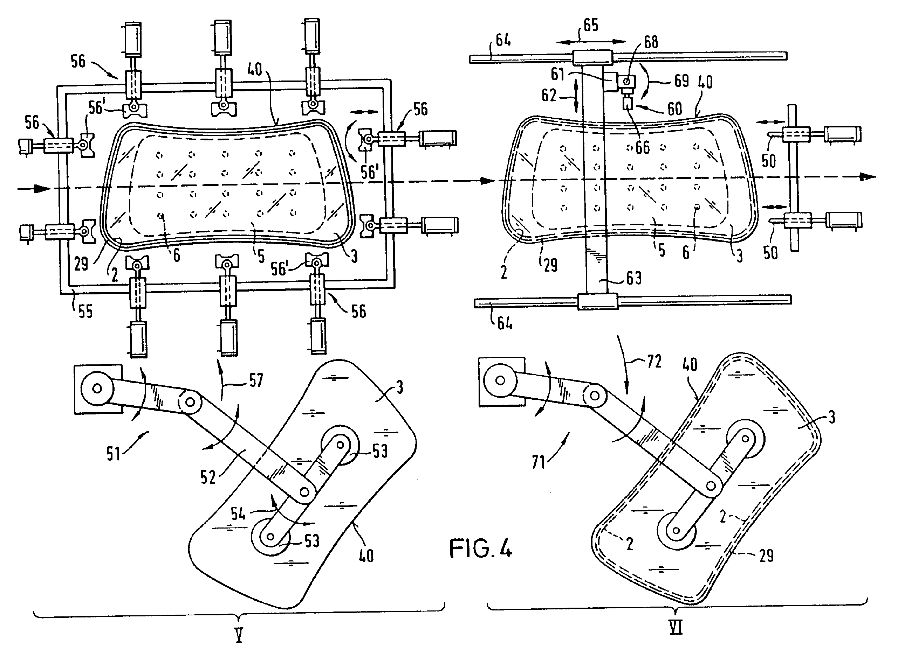

Fig. 4 eine Station V zum Zusammenbau von Isolierglasscheiben und eine Station VI zum Pressen der zusammengelegten Isolierglasscheibenpakete,

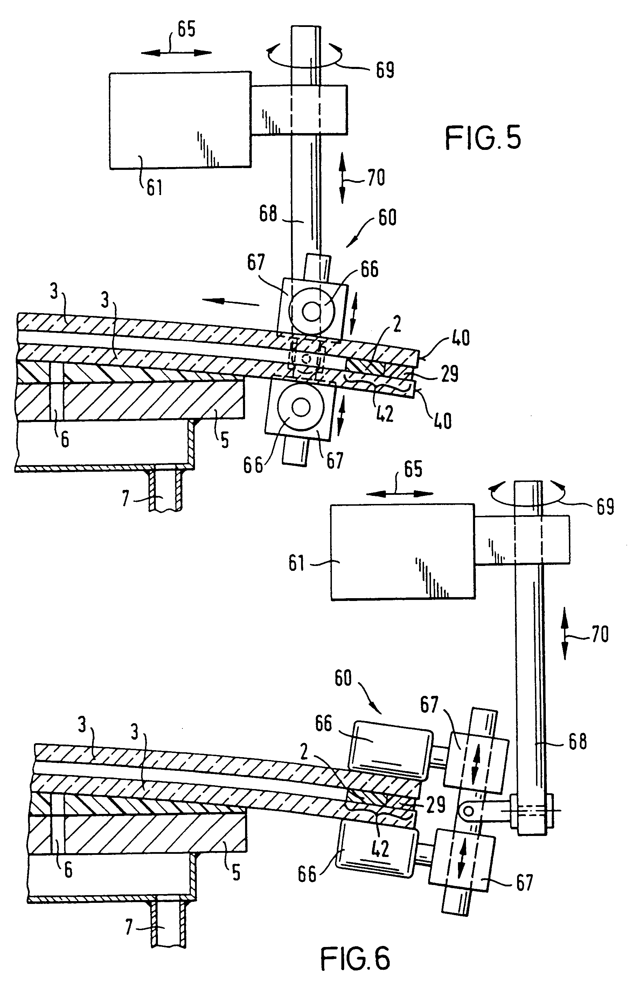

Fig. 5 das Preßwerkzeug in einer Ansicht,

Fig. 6 das Preßwerkzeug in einer zweiten Ansicht,

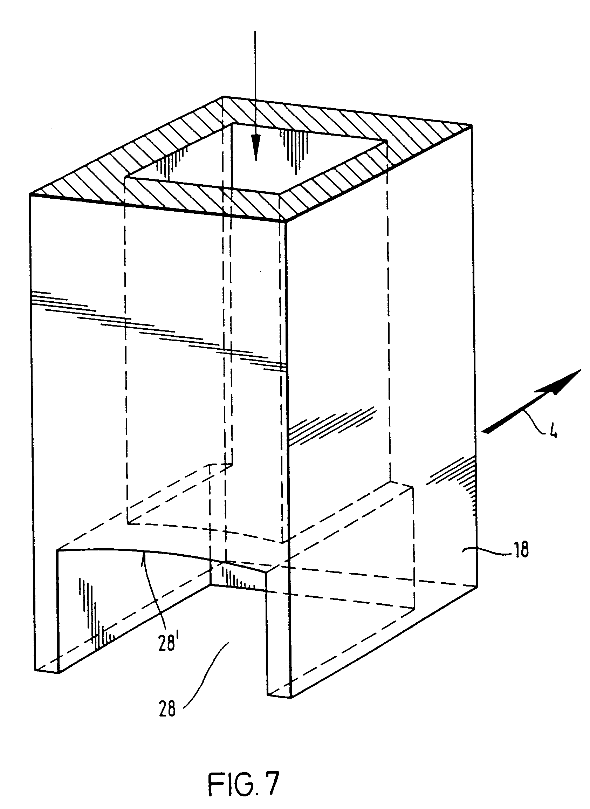

Fig. 7 eine Düse und

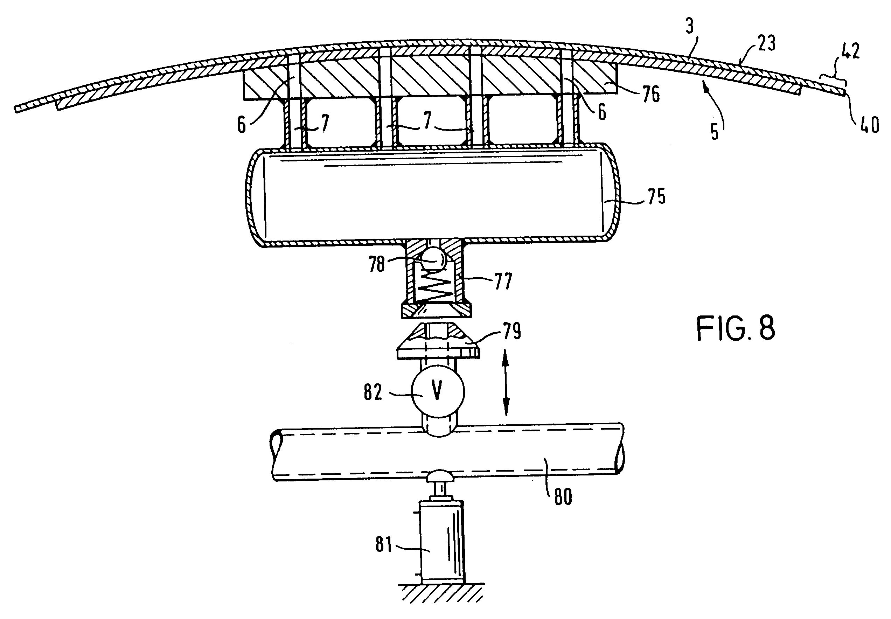

Fig. 8 einen Träger mit einem Unterdruckbehälter.

In der Station I zum Auflegen von gewölbten Glasscheiben 3, die aus einer Waschmaschine 32 kommen, werden die Glasscheiben 3 auf Träger 5 angesetzt.

Die Waschmaschine 32 kann einschließlich der in ihr vorgesehenen Fördervorrichtung, beispielsweise die aus der EP-A-174 294 bekannte Konstruktion besitzen.

In Fig. 1 und 1' sind zwei Alternativen für die Station I gezeigt, wobei bei der in Fig. 1' gezeigten Alternative die Glasscheiben 3 aus der Glaswaschmaschine 32 unmittelbar auf einen Träger 5 angesetzt werden, worauf der Träger 5 dann aus seiner im wesentlichen vertikalen Stellung in die Stellung verschwenkt wird, in der seine Stützfläche etwa horizontal ausgerichtet und die Glasscheibe 3 von unten her unterstützt wird.

In der anderen Alternative, die in Fig. 1 gezeigt ist, ist eine Vorrichtung 34 vorgesehen, die mit zwei Klemmen oder hakenförmigen Organen 35 ausgerüstet ist, welche die Glasscheibe 3 an ihrem oberen und an ihrem unteren Rand erfassen und unter Verschwenken um 90° um eine im wesentlichen horizontale Achse auf einen bereitgestellten Träger 5 auflegen.

Die Träger 5, die in der erfindungsgemäßen Anlage dazu benützt werden, die Glasscheiben 3 zu den verschiedenen Bearbeitungsstationen zu transportieren und in diesen genau ausgerichtet zu halten, besitzen eine konvex gewölbte Stützfläche, die etwa der Kontur der zu bearbeitenden Glasscheibe 3 entspricht und die kleiner ist als die Glasscheibe 3, so daß die Glasscheibe 3 über die Stützfläche des Trägers 5 (Auflageschablone) allseitig vorsteht. Mit Vorteil besteht die Stützfläche der Träger 5 aus Kunststoff, der beispielsweise seine Form erhalten hat, indem er in erwärmtem, verformbarem Zustand mit einer Musterscheibe in Berührung gebracht wurde und entsprechend gebogen worden ist.

Im Träger 5 können zum Festlegen der Glasscheibe 3 Bohrungen 6 vorgesehen sein, die über Leitungen 7 an eine Unterdruckquelle angeschlossen sind, so daß eine Glasscheibe 3 am Träger 5 durch Unterdruck festgelegt werden kann.

Der Träger 5 wird mit Hilfe eines durch eine strichlierte Linie symbolisierten Schienensystems oder einer sonstigen Fördervorrichtung zu und durch die einzelnen Stationen der erfindungsgemäßen Anlage transportiert und wird aus der letzten Station der Anlage wieder zur Station I zurückbewegt.

Die in Fig. 1 gezeigte Station II dient dazu, die auf einen Träger 5 aufgelegte Glasscheibe 3 gegenüber diesem genau auszurichten, damit die Glasscheibe 3 in den nachfolgenden Stationen genau positioniert werden kann. Hiezu wird in der Station II, nachdem der Träger 5 mit einer auf ihm angeordneten Glasscheibe 3 bis in eine z.B. durch wenigstens einen Anschlag definierte Stellung herantransportiert worden ist, der Unterdruck über die Leitung 7 aufgehoben und in einem Gestell 36 in Führungen 37 montierte Positionierschieber 38, die in Richtung des Doppelpfeiles 39 vor- und zurückziehbar sind, so weit vorgeschoben, daß sie an der Außenkante 40 der Glasscheibe 3 anliegen und diese gegenüber dem Träger 5 in vorbestimmter Weise ausrichten. Die Bewegung der Positionierschieber 38, die durch beliebige Linearmotore, wie Druckmittelzylinder, insbesondere Hydraulikzylinder, Schrittmotore u.dgl., denen vorzugsweise elektronische Meßlineale zur Erfassung der Bewegungen der Positionierschieber zugeordnet sind, bewirkt werden kann, wird unter Auswertung der in der CNC-Steuerung der Glasschneidemaschine, in der die Glasscheibe 3 zugeschnitten worden ist, gespeicherten Daten gesteuert. Diese Daten entsprechen der Umrißform der Glasscheibe 3, d.h. dem Verlauf ihrer Kante 40, so daß durch gesteuertes Bewegen der Positionierschieber 38 unter Auswertung dieser Daten die Glasscheibe 3 auf dem Träger 5 genau positioniert werden kann. Nachdem die Glasscheibe 3 auf dem Träger 5 ausgerichtet ist, wird sie auf diesem wieder festgelegt.

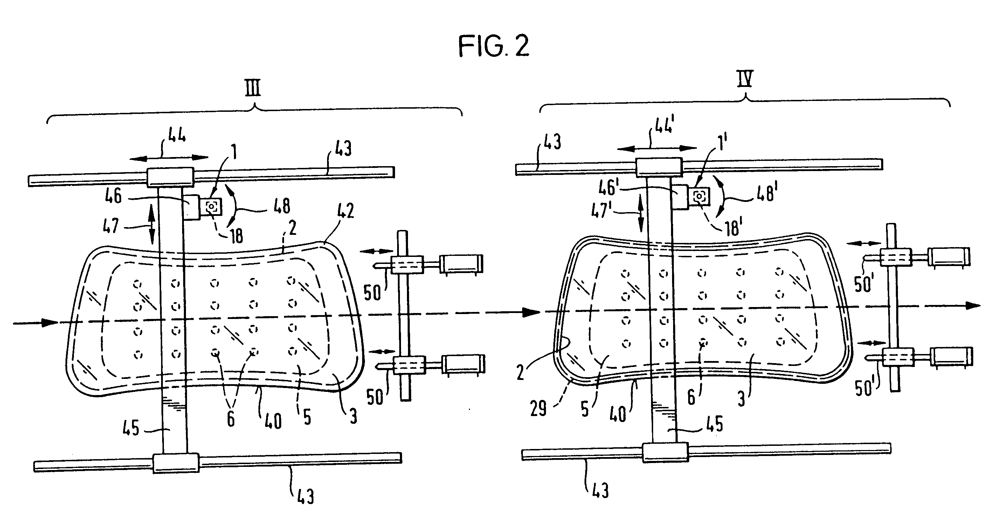

Aus der Station II werden nun die Träger 5 mit darauf beispielsweise durch Unterdruck festgelegten Glasscheiben 3 (jeder Träger 5 trägt eine Glasscheibe 3) in die Station III (Fig. 2) bewegt, in der auf die Oberseite der Glasscheibe 3 in deren Randbereich 42 ein Strang 2 aus plastischer Masse (in Fig. 2 strichliert angedeutet) aufgetragen wird, der als Abstandhalter der herzustellenden Isolierglasscheibe dient. Als Masse für den als Abstandhalter dienenden Strang 2 kann Butylkautschuk verwendet werden, der ein hygroskopisches Material enthält.

Hiezu ist in der Station III eine auf Schienen 43 in Richtung des Doppelpfeiles 44 verfahrbare Brücke 45 vorgesehen, an der ein Schlitten 46 geführt ist, der in Richtung des Doppelpfeiles 47 entlang der Brücke 45 verschoben werden kann.

Der Schlitten 46 trägt über einen Stab 11 um die Achse 12 (Pfeil 48) verschwenkbar eine Vorrichtung 1 mit einer Düse 18, die in Fig. 3 gezeigt ist.

Bei dieser Ausführungsform wird die Vorrichtung 1 mit der Düse 18 entlang des Randes 42 der Glasscheibe 3 in Richtung des Pfeiles 4 bewegt, wobei diese Bewegung entlang des Randes 42 der Glasscheibe 3 dadurch erreicht wird, daß die Vorrichtung 1 am Schlitten 46 montiert ist, der entlang dem Balken 45 verschiebbar ist, wobei der Balken 45 selbst durch einen Antrieb quer zu seiner Längserstreckung bewegt werden kann. Im wesentlichen entspricht der Bewegungsantrieb der Vorrichtung 1 dem Aufbau einer Glasschneidemaschine, wobei am Schlitten 46 anstelle des Ritzwerkzeuges die Vorrichtung 1 vorgesehen ist. Die Glasscheibe 3 kann dabei wie im Ausführungsbeispiel gezeigt, im wesentlichen horizontal ausgerichtet sein, es sind aber auch Ausführungsformen mit annähernd lotrecht stehender Glasscheibe 3 denkbar.

Die Glasscheibe 3 wird vom Träger 5 gehalten, dessen Stützfläche wenigstens annähernd im gleichen Ausmaß gekrümmt ist wie die Glasscheibe 3, und in der Bohrungen 6 vorgesehen sind, an die über Leitungen 7 Unterdruck angelegt werden kann. Eine derartige Halterung für die Glasscheibe 3 besitzt gegenüber den herkömmlichen mit Unterdruck arbeitenden Halterungen mit Gummisaugnäpfen den Vorteil, daß eine exakte Positionierung der Glasscheibe 3 möglich ist, so daß die Bewegungen der Vorrichtung 1 entlang einer zum Rand der Glasscheibe 3 parallel verlaufenden Bewegungsbahn auf Grund der in der Formen-Glasschneidmaschine gespeicherten Daten (CNC-Steuerung) erfolgen kann. Eine gesonderte Abtastung des Randes der Glasscheibe 3, die im Prinzip möglich ist, ist bei dieser Ausführungsform für die Steuerung der Bewegung der Vorrichtung 1 entbehrlich.

Die Vorrichtung 1 besitzt einen Träger 10, der über den Stab 11 mit dem Schlitten 46 verbunden und um eine im wesentlichen senkrecht zur Glasscheibe 3 ausgerichtete Achse 12 verschwenkbar ist. Im Träger 10 ist eine Führungsstange 13 geführt, die durch einen Ritzel-Zahnstangen-Antrieb 14, 15 in Richtung des Doppelpfeiles 16 relativ zur Glasscheibe 3 verstellbar ist. Mit diesem ersten Antrieb (Grobantrieb) kann die Halterung 17, an der die Düse 18 und ein Tastfinger 19 aufgebaut sind, knapp vor die Fläche 23 der Glasscheibe 3 zugestellt werden. Falls auch die Daten über die Krümmung oder Wölbung der Glasscheibe 3 gespeichert sind, was bei Serienfertigung, z.B. von Windschutz-Isolierglasscheiben in der Regel der Fall sein wird, dann können diese Daten auch dazu herangezogen werden, die Düse entsprechend der Wölbung/Krümmung zu bewegen (Bewegung in Richtung der Achse 12 durch den Antrieb 14, 15).

Die Düse 18 ist ihrerseits in der Halterung 17 in Richtung des Doppelpfeiles 20 mit Hilfe eines Ritzel-Zahnstangen-Antriebes 21, 22 verstellbar.

Der in dieser Ausführungsform als Einrichtung zum Messen des Abstandes zwischen der Fläche 23 der Glasscheibe 3 und der Halterung 17 vorgesehene Tastfinger 19 (Die Meßeinrichtung kann auch eine berührungslos arbeitende Meßeinrichtung sein, beispielsweise eine, die mit einem Laser-Strahl arbeitet, oder eine optische Meßeinrichtung ähnlich einem Entfernungsmesser, wie er für Auto-Focus-Fotoapparate verwendet wird. Auch mit Infrarot arbeitende Entfernungsmeßeinrichtungen sind verwendbar.) trägt an seinem vorderen Ende eine auf der Fläche 23 der Glasscheibe 3 ablaufende Rolle 24 und ist in Richtung des Doppelpfeiles 25 beweglich, wobei er beispielsweise durch eine Feder (nicht gezeigt), gegen die Fläche 23 der Glasscheibe 3 gedrückt wird.

Dem Tastfinger 19 ist ein Sensor 26 zugeordnet, der beispielsweise ein elektronisches Meßlineal ist und der dem Abstand zwischen der Halterung 17 und der Fläche 23 der Glasscheibe 3 entsprechende Signale abgibt. Diese Signale des Sensors 26 werden dem Antrieb für das Ritzel 21 zugeführt, so daß die Düse 18 auch bei Abweichungen der Lage des Randes der Glasscheibe 3 von der Soll-Lage - diese Abweichungen können nach oben und nach unten ein Ausmaß bis zur Stärke der Glasscheibe 3 erreichen - stets genau im vorgegebenen Abstand, der einstellbar ist, über der Fläche 23 der Glasscheibe 3 verbleibt. So kann in der Praxis ein Abstand des vorderen Endes der Düse 18 von der Oberfläche 23 der Glasscheibe 3 von beispielsweise etwa 0,5 mm eingehalten werden, ohne daß Gefahr besteht, daß die Düse 18 auf die Glasscheibe 3 auffährt und diese beschädigt oder selbst beschädigt wird.

Knapp vor der Mündung der Düse 18 oder aber im Bereich des Dosierzylinders für die aus der Düse 18 auf die Glasscheibe 3 aufzutragende Masse ist ein Sensor 30 vorgesehen, der die in der Zeiteinheit aus der Düse 18 austretende Menge (Austrittsrate) an plastischer Masse 2 (z.B. Butylkautschuk oder beim Aufbringen des Versiegelungsstranges Polysulfid oder eine andere elastisch aushärtende Masse) erfaßt. Der Sensor 30 gibt an die Bewegungsantriebe der Vorrichtung 1 (Antrieb des Balkens 45 und Antrieb des Schlittens 46 sowie Antrieb zum Verdrehen der Vorrichtung 1 um die Achse 12), welche diese entlang des Randes 42 der Glasscheibe 3 in Richtung des Pfeiles 4 bewegen, entsprechende Signale ab, so daß die Bewegungsgeschwindigkeit entsprechend der Austrittsrate an plastischer Masse aus der Düse 18 geregelt, d.h. bei Erhöhungen der Ausspritzrate vergrößert und bei Verkleinerungen derselben verkleinert wird.

Durch das genaue Einhalten des Abstandes und vorzugsweise durch die geschilderte Regelung der Bewegungsgeschwindigkeit der Düse 18 wird ein genau bemessener, vorzugsweise einen viereckigen Querschnitt aufweisender Strang 2 oder bei einer Zweifachdüse zwei parallele Stränge 2 und 29 (Fig. 3') auf die Fläche 23 der Glasscheibe 3 aufgetragen.

Aus Fig. 7 ist erkennbar, daß die bezogen auf die Bewegungsrichtung (Pfeil 4) an der hinteren Seite der Düse 18 vorgesehene Ausnehmung 28, die dem Strang 2 seine gewünschte Form verleiht, eine konkave obere Begrenzung 28' aufweist. So besitzt der Strang 2, der auf die Glasscheibe 3 aufgetragen wurde, oben eine entsprechend gewölbte Fläche.

Nachdem so auf die Glasscheibe 3 ein Abstandhalter 2 aufgetragen worden ist, wird diese in die Station IV bewegt, in der parallel zum Abstandhalter 2 und parallel zur Kante 40 der Glasscheibe 3 außerhalb des Abstandhalters 2 auf den Randbereich 42 ein Streifen 29 aus Dichtmasse aufgetragen wird. Die hiezu verwendete Vorrichtung 1' kann den gleichen Aufbau besitzen, wie die oben beschriebene, in der Station III verwendete und in Fig. 3 gezeigte Vorrichtung 1.

In einer abgeänderten Ausführungsform ist es auch möglich, anstelle der Einfachdüse 18 eine Zweifachdüse zu verwenden und den Abstandhalter 2 und die Dichtmasse 29 in einem einzigen Arbeitsgang aufzuspritzen, in welchem Fall Station III mit Station IV vereinigt ist.

Eine weitere Möglichkeit, den Abstandhalter 2 und den Strang 29 aus Dichtmasse in einer Station auf die Glasscheibe 3 aufzutragen, besteht darin, am Balken 45 zwei Schlitten 46, 46' vorzusehen, von welchen einer die in Fig. 3 gezeigte Vorrichtung 1 zum Auftragen des Abstandhalters 2 und ein zweiter eine der Vorrichtung 1 gemäß Fig. 3 entsprechend aufgebaute Vorrichtung 1' zum Aufbringen der Dichtmasse 29 auf die Fläche 23 der Glasscheibe 3 trägt.

Es ist noch zu erwähnen, daß die Positionierung der Glasscheibe 3 in der Station III und in der Station IV durch Positionsanschläge 50 bzw. 50' erfolgt, die gleichzeitig die Referenzpunkte für die Steuerung der Bewegungen (Pfeile 44, 44', 47, 47', 48, 48') der Düsen 18 bzw. 18' beim Aufspritzen des Abstandhalters 2 und der Dichtmasse 29 auf die Glasscheibe 3 darstellen.

In Fig. 3' ist noch gezeigt, wie der Rand 42 der Glasscheibe 3 nach dem Verlassen der Station IV oder der kombinierten Station III/IV ausgebildet ist. Es ist erkennbar, daß im Abstand von der Kante 40 ein Strang 2 aus Butylkautschuk od.dgl. aufgebracht ist, der als Abstandhalter dient und außerhalb desselben, d.h. zwischen dem Strang 2 und dem Rand 40 der Glasscheibe 3 im Randbereich 42 derselben ein Strang 29 aus Dichtmasse aufgetragen worden ist. Die Dichtmasse, welche den Strang 29 bildet, ist vorzugsweise eine Zweikomponenten-Dichtmasse, die zu einem elastischen Zustand aushärtet, beispielsweise ein Polysulfid. Fig. 3' zeigt auch, daß beide Stränge 2 und 29 eine rechteckige Querschnittsform aufweisen, wobei der als Abstandhalter dienende Strang 2 etwas dicker ausgebildet ist, als der Strang 29 aus Dichtmasse.

Die so vorbereitete Glasscheibe 3 wird auf ihrem Träger 5 in die Station V bewegt, in welcher der Zusammenbau der Isolierglasscheibe durch Auflegen einer weiteren Glasscheibe 3 erfolgt.

Hiezu ist in der Station V ein Roboter 51 vorgesehen, der Glasscheiben 3, die vorher gewaschen und getrocknet worden sind, beispielsweise aus einem nicht gezeigten Stapel aufnimmt und in Richtung des Bewegungspfeiles 57 möglichst genau auf die in der Station V befindliche Glasscheibe 3 auflegt. Hiezu ist der Roboter 51, der beispielsweise kranartig ausgebildet ist, an dem freien Ende seines Auslegers 52 mit einem Kopf mit zwei Saugnäpfen 53 versehen, deren Tragarme um eine lotrechte Achse in Richtung des Doppelpfeiles 54 verschwenkt werden können.

Wegen der Ungenauigkeit beim Erfassen von Glasscheiben mit Hilfe der Saugnäpfe 53 kann die Glasscheibe 3 auf der in der Station V befindlichen Glasscheibe 3 nicht genau aufgesetzt werden. Hiezu sind in der Station V auf einem Rahmen 55 montiert, mehrere Ausrichtschieber 56 vorgesehen, die ähnlich ausgeführt sein können, wie die Positionierschieber 38 in der Station II. Durch Betätigen der Ausrichtschieber 56 wird die auf die beiden Stränge 2 und 29 aufgelegte Glasscheibe 3 in eine die am Träger 5 festgelegten Glasscheibe 3 genau überdeckende Stellung verschoben. Dies kann dadurch erfolgen, daß die Ausrichtschieber 56 einen vorderen verschwenkbaren Anschlag 56' aufweisen, der sowohl die untere am Träger 5 festgelegte Glasscheibe 3, als auch die obere vom Roboter 51 aufgelegte Glasscheibe 3 berührt. Zusätzlich oder alternativ kann die Bewegung der Ausrichtschieber 56 wie oben für die Positionierschieber 38 der Station II erläutert, über die Daten der Steuerung der Glasschneidemaschine erfolgen. Insbesondere in diesem Fall genügt es, wenn die Ausrichtschieber 56 mit ihrem vorderen, gegebenenfalls zugespitzten Ende bloß an der oberen Glasscheibe 3 angreifen.

Das so zusammengestellte, aber noch nicht verpreßte, aus zwei Glasscheiben 3, mit dazwischen angeordnetem Abstandhalter 2 und Strang 29 aus Dichtmasse bestehende Scheibenpaket wird nun vom Träger 5 in die Station VI zum Verpressen des Scheibenpaketes bewegt.

Die Station VI ist wieder mit zwei beweglichen Anschlägen 50 zum Definieren der Position der Glasscheiben 3 in der Station VI ausgestattet, die ähnlich, wie die Anschläge 50 in Station III und/oder IV ausgebildet sind und die auch als Referenzpunkte für die Steuerung des Preßwerkzeuges 60 dienen.

Das Preßwerkzeug 60, das in mehr Einzelheiten in den Fig. 5 und 6 gezeigt ist, ist auf einem Schlitten 61 montiert, der in Richtung des Doppelpfeiles 62 auf einem Balken 63 verschiebbar ist, der seinerseits auf Schienen 64 in Richtung des Doppelpfeiles 65 bewegt werden kann. Das Preßwerkzeug 60 ist über eine Welle 68 um eine zum Randbereich 42 der das Scheibenpaket bildenden Glasscheiben 3 im wesentlichen senkrecht stehende Achse verschwenkbar, wie in Fig. 4 durch den Doppelpfeil 69 angedeutet ist. Zusätzlich ist die Welle 68 in Richtung des Doppelpfeiles 70 beweglich am Schlitten 61 geführt.

Das Preßwerkzeug 60 besitzt zwei Preßrollen 66, die von beiden Seiten her an den Glasscheiben 3 anliegen, und die von ihren Halterungen 67 aufeinander zu belastet werden, so daß auf die Scheiben 3 eine entsprechende und hinreichende Preßkraft ausgeübt wird, um den sicheren Randverbund der herzustellenden Isolierglasscheibe zu erzielen.

Das Preßwerkzeug 60 kann beispielsweise so aufgebaut sein, wie dies aus der AT-PS 335 163 im Prinzip bekannt ist.

Die Steuerung der Bewegungen des Preßwerkzeuges 60 entlang des zu verpressenden Randbereiches 42 der beiden Glasscheiben 3 kann so wie die Steuerung der Bewegungen der Düsen 18, 18′ in den Stationen III und/oder IV unter Auswertung der in der Glasschneidemaschine gespeicherten Daten über die Kontur der Glasscheiben 3 erfolgen.

Nachdem die beiden Glasscheiben 3 zu einer Isolierglasscheibe verpreßt worden sind, wird die Isolierglasscheibe mit Hilfe eines Umsetzkranes 71, der ähnlich wie der Roboter 51 in der Station V aufgebaut sein kann, vom Träger 5 aus der Anlage abgehoben (Pfeil 72) und für den Versand bereitgestellt. Der so wieder frei gewordene Träger 5 wird wieder zur Station I zurückbewegt, wozu die Schienen, auf welchen die Träger 5 bewegt werden, beispielsweise eine in sich geschlossene Bahn bilden.

Wenn die Träger 5 mit einer Vakuumeinrichtung zum Festlegen einer Glasscheibe 3 ausgerüstet sind, dann können sie wie in Fig. 8 gezeigt, mit einem z.B. rohrförmigen Unterdruckbehälter 75 ausgestattet sein. Vom Unterdruckbehälter 75 gehen die Leitungen 7 aus, welche die Bohrungen 6, die bei der in Fig. 8 gezeigten Ausführungsform nur im Mittelteil 76 des Trägers 5 angeordnet sind, mit Unterdruck versorgen.

Der Unterdruckbehälter 75 besitzt einen als Unterdruckeinlaß dienenden Stutzen 77, in dem ein Rückschlagventil 78 angeordnet ist. Dieser Stutzen 77 wird mit Unterdruckanschlüssen 79, die in einer oder mehreren der Stationen II bis VI der erfindungsgemäßen Anlage vorgesehen sind, verbunden, wenn sich der Träger 5 in der entsprechenden Station befindet. Hiezu ist ein Teil der die Anschlüsse 79 tragenden Leitung 80, die zu einer Unterdruckquelle führt, hebbar (Druckmittelzylinder 81). Im Anschluß 79 ist ein in Fig. 8 nur symbolisiertes Ventil 82 vorgesehen, das sich öffnet, wenn der Unterdruckanschluß 79 mit einem Unterdruckeinlaß 77 gekuppelt worden ist.

## Patentansprüche

1. Anlage zur Herstellung von Isolierglasscheiben aus wenigstens zwei nach wenigstens einer Richtung gekrümmten Glasscheiben (3), insbesondere Isolierglasscheiben für Fenster von Kraftfahrzeugen, mit einer Station (III) zum Auftragen eines als Abstandhalter dienenden Kunststoffstranges (2), einer Station (IV) zum Auftragen einer Dichtmasse (29) parallel zum Abstandhalter (2), die gegebenenfalls mit der zuvor genannten Station (III) kombiniert ist, einer Station (V) zum Zusammenbau, einer Station (VI) zum Verpressen des zusammengestellten Scheibenpaketes und einer Fördereinrichtung zum vorzugsweise taktweisen Transport der Glasscheiben (3) durch die Stationen (I bis VI) der Anlage, welche Fördereinrichtung mehrere insbesondere auf Schienen verfahrbare Träger (5) für die Glasscheiben (3) aufweist, die auf ihrer der Glasscheibe (3) zugewandten Stützfläche annähernd der Form der Glasscheibe (3) entsprechend gekrümmt und mit Einrichtungen (6, 7) zum Festlegen der Glasscheibe (3) ausgerüstet sind.

2. Anlage nach Anspruch 1, dadurch gekennzeichnet, daß die Träger (5) kleiner sind als die von ihnen gehaltenen Glasscheiben (3), so daß die Glasscheibe (3) über den Rand ihres Trägers (5) vorsteht.

3. Anlage nach Anspruch 1 oder 2, dadurch gekennzeichnet, daß die Träger (5) mit Unterdruckeinrichtungen (6, 7) zum Festlegen der Glasscheiben (3) auf ihnen ausgestattet sind.

4. Anlage nach einem der Ansprüche 1 bis 3, dadurch gekennzeichnet, daß vor der Station (III) zum Auftragen des Abstandhalters (2) eine Station (I, II) vorgesehen ist, in der aus einer Waschmaschine (32) kommende Glasscheiben (3) auf einen Träger (5) der Fördereinrichtung aufgesetzt und auf diesem ausgerichtet festgelegt werden.

5. Anlage nach Anspruch 4, dadurch gekennzeichnet, daß die Station (II) mit wenigstens drei, vorzugsweise mehr als drei Positionierschiebern (38) ausgestattet ist, welche die Glasscheibe (3) gegenüber dem Träger (5) ausrichten, bevor sie am Träger (5) festgelegt wird.

6. Anlage nach einem der Ansprüche 1 bis 5, dadurch gekennzeichnet, daß in der Station (III) zum Auftragen des Abstandhalters (2), der vorzugsweise aus Butylkautschuk, dem gegebenenfalls hygroskopische Stoffe zugemischt sind, besteht, wenigstens zwei Anschläge (50) zum genau ausgerichteten Anhalten der Glasscheibe (3) vorgesehen sind.

7. Anlage nach Anspruch 6, dadurch gekennzeichnet, daß die Düse (18) zum Auftragen des Abstandhalters (2) an einem Schlitten (46) gehalten ist, der längs einer quer (Pfeil 44) zu ihrer Längserstreckung verfahrbaren Brücke (45) verstellbar (Pfeil 47) ist.

8. Anlage nach Anspruch 7, dadurch gekennzeichnet, daß die Düse (18) nach mehreren Freiheitsgraden bewegbar ist, wobei die Freiheitsgrade die Verschiebbarkeit (Pfeil 44) der Brücke (45), die Verstellbarkeit (Pfeil 47) des Schlittens (46) entlang der Brücke (45), die Verdrehung (Pfeil 48) der Düse (18) um eine zur Glasfläche (23) senkrechte Achse (12), die Verstellbarkeit (Pfeil 16) der Halterung (17) der Düse (18) senkrecht zur Achse (12) (Grobeinstellung) und die Verstellbarkeit (Pfeil 20) der Düse (18) gegenüber ihrer Halterung (17) (Feineinstellung) sind.

9. Anlage nach Anspruch 8, dadurch gekennzeichnet, daß in Bewegungsrichtung (Pfeil 4) gesehen vor der Düse (18) eine Einrichtung zum Messen des Abstandes zwischen der Halterung (17) der Düse (18) und der Fläche (23) der Glasscheibe (3), beispielsweise ein auf der Fläche (23) der Glasscheibe (3) anliegender Tastfinger (19) vorgesehen ist, die den Antrieb (21, 22) zum Verstellen der Düse (18) senkrecht zur Fläche (23) der Glasscheibe (3) derart steuert, daß während des Auftragens des Abstandhalters (2) der Abstand der Düse (18) von der Fläche (23), auf die der Abstandhalter (2) aufzutragen ist, einen vorbestimmten, konstanten Wert hat.

10. Anlage nach Anspruch 9, dadurch gekennzeichnet, daß die Düse (18) zum Auftragen eines im Querschnitt rechteckigen Stranges (2) auf den Rand der Glasscheibe (3) ausgebildet ist.

11. Anlage nach Anspruch 9 oder 10, dadurch gekennzeichnet, daß der Tastfinger (19) an seinem der Fläche (23) der Glasscheibe (3) zugekehrten Ende eine auf der Fläche (23) anliegende Rolle (24) trägt.

12. Anlage nach einem der Ansprüche 8 bis 11, dadurch gekennzeichnet, daß für das Verstellen der Düse (18) senkrecht zur Fläche (23) der Glasscheibe (3) zwei voneinander unabhängige Antriebe (14, 15) vorgesehen sind, daß ein erster Antrieb ein an sich bekannter Antrieb zum Zustellen der Düse (18) bis vor die Fläche (23) der Glasscheibe (3) ist, und daß der zweite Antrieb (21, 22) mit der Meßeinrichtung, z.B. mit dem Tastfinger (19) wirkungsmäßig verbunden ist.

13. Anlage nach Anspruch 12, dadurch gekennzeichnet, daß die Meßeinrichtung z.B. der Tastfinger (19) von der durch den ersten Antrieb (14, 15) verstellbaren Halterung (17) der Düse (18) getragen ist, und daß ihre Signale, die dem Abstand zwischen Halterung (17) und Fläche (23) der Glasscheibe (3) bzw. Veränderungen dieses Abstandes entsprechen, an den zweiten Antrieb (21, 22) für die Verstellung der Düse (18) abgegeben werden.

14. Anlage nach einem der Ansprüche 1 bis 13, dadurch gekennzeichnet, daß in der Station (IV) zum Auftragen einer Dichtmasse (29) eine parallel zum Abstandhalter (2) und - bezogen auf die Glasscheibe (3) - außerhalb des Abstandhalters (2) verfahrbare Düse (18′) zum Aufspritzen von Dichtmasse vorgesehen ist, und daß die Düse (18′) zum Aufbringen der Dichtmasse (29) an einem Schlitten (46′) gehalten ist, der längs einer quer (Pfeil 44′) zu ihrer Längserstreckung verfahrbaren Brücke (45) verstellbar (Pfeil 47′) ist.

15. Anlage nach Anspruch 14, dadurch gekennzeichnet, daß in Bewegungsrichtung (4) gesehen vor der Düse (18′) eine Einrichtung zum Messen des Abstandes zwischen der Halterung der Düse (18′) und der Fläche (23) der Glasscheibe (3), beispielsweise ein auf der Fläche (23) der Glasscheibe (3) anliegender Tastfinger (19), vorgesehen ist, die den Antrieb (21, 22) zum Verstellen der Düse (18′) senkrecht (Pfeil 20) zur Fläche (23) der Glasscheibe (3) derart steuert, daß während des Auftragens der Dichtmasse (29) der Abstand der Düse (18′) von der Fläche (23), auf welche die Dichtmasse (29) aufzutragen ist, einen vorbestimmten, konstanten Wert hat.

16. Anlage nach Anspruch 15, dadurch gekennzeichnet, daß die Düse (18′) zum Auftragen eines im Querschnitt im wesentlichen rechteckigen Stranges (29) auf den Randbereich (42) der Glasscheibe (3) ausgebildet ist.

17. Anlage nach Anspruch 16, dadurch gekennzeichnet, daß der Tastfinger (19) an seinem auf der Fläche (23) der Glasscheibe (3) anliegenden Ende eine rolle (24) trägt.

18. Anlage nach Anspruch 17, dadurch gekennzeichnet, daß für das Verstellen der Düse (18') senkrecht (Pfeil 20) zur Fläche (23) der Glasscheibe (3) zwei voneinander unabhängige Antriebe (14, 15; 21, 22) vorgesehen sind, daß ein erster Antrieb (14, 15) ein an sich bekannter Antrieb zum Zustellen der Düse (18') bis vor die Fläche (23) der Glasscheibe (3) ist, und daß der zweite Antrieb (21, 22) mit der Meßeinrichtung beispielsweise mit dem Tastfinger wirkungsmäßig verbunden ist.

19. Anlage nach Anspruch 18, dadurch gekennzeichnet, daß die Meßeinrichtung beispielsweise der Tastfinger (19) von der durch den ersten Antrieb (14, 15) verstellbaren Halterung (17) der Düse (18') getragen ist, und daß ihre Signale, die dem Abstand zwischen Halterung (17) und Fläche (23) der Glasscheibe (3) bzw. Veränderungen dieses Abstandes entsprechen, an den zweiten Antrieb (21, 22) für die Verstellung der Düse (18') abgegeben werden.

20. Anlage nach einem der Ansprüche 1 bis 19, dadurch gekennzeichnet, daß die Düse (18') zum Auftragen der Dichtmasse (29) auf die Glasscheibe (3) mit der Düse (18) zum Aufspritzen des Abstandhalters (2) zu einer Zweifachdüse kombiniert ist.

21. Anlage nach Anspruch 20, dadurch gekennzeichnet, daß die Düse (18) für das Aufspritzen des Abstandhalters (2) und/oder die Düse (18') zum Aufspritzen des Dichtmassenstranges (29) zur Herstellung von Strängen mit rechteckiger Querschnittsform ausgebildet sind, wobei der Strang (2), der den Abstandhalter bildet, dicker ist als der Strang (29) aus Dichtmasse.

22. Anlage nach einem der Ansprüche 1 bis 21, dadurch gekennzeichnet, daß in der Station (V) zum Zusammenstellen von zwei Glasscheiben (3) zu einem Scheibenpaket, d.h. zum Auflegen einer Glasscheibe (3) auf die am Träger (5) festgelegte, mit den zwei Kunststoffsträngen (2, 29) versehene Glasscheibe (3), ein Greifer (51, 52, 53) vorgesehen ist, der die aufzulegende Glasscheibe (3), z.B. aus einem Stapel von Glasscheiben (3) aufnimmt und auf die Stränge (2, 29) ablegt, und daß nach dem Lösen des Greifers (51, 52, 53) von der Glasscheibe (3) von außen auf die Glasscheibe (3) zu vorschiebbare Ausrichtschieber (56) vorgesehen sind, durch welche die aufgelegte Glasscheibe (3) in eine die festgelegte Glasscheibe (3) überdeckende Stellung verschiebbar ist.

23. Anlage nach Anspruch 22, dadurch gekennzeichnet, daß die Ausrichtschieber (56) vorzugsweise gleichzeitig bis in Anlage an die am Träger (5) festgelegte Glasscheibe (3) vorschiebbar sind.

24. Anlage nach Anspruch 22 oder 23, dadurch gekennzeichnet, daß die Ausrichtschieber (56) unter Auswertung in der Glasschneidevorrichtung mit der die Glasscheibe (3) hergestellt worden ist, gespeicherten Daten für die Umrißform der Glasscheibe (3) gesteuert sind.

25. Anlage nach einem der Ansprüche 1 bis 24, dadurch gekennzeichnet, daß in der Station (VI) zum Verpressen des Scheibenpaketes ein entlang des Randes (42) der Glasscheiben (3) des Scheibenpaketes verfahrbares, mit wenigstens zwei einander gegenüberliegenden und aufeinander zu belastbaren und von beiden Seiten her an das Scheibenpaket anlegbaren Druckrollen (66) versehenes Werkzeug (60) vorgesehen ist.

26. Anlage nach Anspruch 25, dadurch gekennzeichnet, daß das Werkzeug (60) an einem Schlitten (61) montiert ist, der auf einer quer zu ihrer Längserstreckung verfahrbaren Brücke (63) verstellbar geführt ist.

27. Anlage nach Anspruch 25 oder 26, dadurch gekennzeichnet, daß die Druckrollen (66) am Schlitten (61) um eine zum Randbereich (42) der Glasscheiben (3) etwa senkrechte Achse (68) verdrehbar (Pfeil 69) sind.

28. Anlage nach Anspruch 5, dadurch gekennzeichnet, daß die Positionierschieber (36) zum Ausrichten der auf den Träger (5) aufgelegten Glasscheibe (3) unter Auswertung der in der Glasschneidevorrichtung, mit der die Glasscheibe (3) hergestellt worden ist, gespeicherten Daten für die Umrißform der Glasscheibe (3) gesteuert sind.

29. Anlage nach einem der Ansprüche 1 bis 28, dadurch gekennzeichnet, daß die Bewegungen der Düse (18) für das Auftragen des Abstandhalters (2), der Düse (18') für das Auftragen des Stranges (29) aus Dichtmasse und/oder des Preßwerkzeuges (60) unter Auswertung der in der Glasschneidevorrichtung, mit der die Glasscheibe (3) hergestellt worden ist, gespeicherten Daten für die Umrißform der Glasscheibe (3) gesteuert sind.

**30.** Anlage nach Anspruch 4, dadurch gekennzeichnet, daß in Station (I) eine Auflegeeinrichtung (34) vorgesehen ist, die einen Greifer besitzt, der aus einer Waschmaschine (32) kommende Glasscheiben (3) erfaßt und gegebenenfalls unter Verschwenken um eine etwa horizontale Achse auf einen Träger (5) auflegt (Fig. 1).

**31.** Anlage nach Anspruch 30, dadurch gekennzeichnet, daß der Greifer mit Saugnäpfen ausgestattet ist.

**32.** Anlage nach Anspruch 30, dadurch gekennzeichnet, daß der Greifer mit wenigstens zwei an einander gegenüberliegenden Rändern der Glasscheibe (3) anlegbaren, hakenförmigen Halteorganen (35) ausgestattet ist.

**33.** Anlage nach Anspruch 4, dadurch gekennzeichnet, daß in Station (I) die Halterung (5) in eine Stellung mit im wesentlichen lotrechter Stützfläche kippbar ist und daß eine Glasscheibe (3), die aus einer Waschmaschine (32) kommt, an der Halterung (5), die in die Stellung mit im wesentlichen lotrechter Stützfläche gekippt ist, festgelegt wird (Fig. 1').

**34.** Anlage nach einem der Ansprüche 1 bis 19, dadurch gekennzeichnet, daß die Düse (18') zum Auftragen des Stranges (29) aus Dichtmasse an einem längs des Balkens (45), an dem der die Düse (18) zum Auftragen des Abstandhalters (2) tragende Schlitten (46) geführt ist, verstellbaren Schlitten (46') montiert ist.

**35.** Anlage nach Anspruch 1, einem der Ansprüche 14 bis 21 oder 35, dadurch gekennzeichnet, daß in der Station (IV) zum Auftragen des Stranges (29) aus Dichtmasse wenigstens zwei Anschläge (50') zum genau ausgerichteten Anhalten der Glasscheibe (3) vorgesehen sind.

**36.** Anlage nach Anspruch 6, 25 oder 35, dadurch gekennzeichnet, daß die Anschläge (50, 50') mit dem Träger (5) bzw. an diesem angebrachten Gegenanschlägen und/oder mit der am Träger (5) festgelegten Glasscheibe (3) zusammenwirken.

**37.** Anlage nach Anspruch 14, dadurch gekennzeichnet, daß die Düse (18) nach mehreren Freiheitsgraden bewegbar ist, wobei die Freiheitsgrade die Verschiebbarkeit (Pfeil 44) der Brücke (45), die Verstellbarkeit (Pfeil 47) des Schlittens (46) entlang der Brücke (45), die Verdrehung (Pfeil 48) der Düse (18) um eine zur Glasfläche (23) senkrechte Achse (12), die Verstellbarkeit (Pfeil 16) der Halterung (17) der Düse (18) in einer senkrecht zur Glasfläche (23) gerichteten Achse (12) (Grobeinstellung) und die Verstellbarkeit (Pfeil 20) der Düse (18) gegenüber ihrer Halterung (17) (Feineinstellung) sind.

**38.** Anlage nach Anspruch 16, dadurch gekennzeichnet, daß die Düse (18) zum Auftragen eines Stranges (2) bzw. die Austrittsausnehmung (28) mit konvex gekrümmter Oberseite (28') ausgebildet ist.

**39.** Anlage nach einem der Ansprüche 3 bis 38, dadurch gekennzeichnet, daß der Träger (5) mit einem Unterdruckbehälter (75) ausgestattet ist, daß wenigstens in einigen Stationen (II bis VI) Unterdruckanschlüsse (79) vorgesehen sind, die mit einem am Unterdruckbehälter (75) angeordneten Unterdruckeinlaß (77) kuppelbar sind.

**40.** Anlage nach Anspruch 39, dadurch gekennzeichnet, daß dem Unterdruckeinlaß (77) ein Rückschlagventil (78) zugeordnet ist.

**41.** Anlage nach Anspruch 39 oder 40, dadurch gekennzeichnet, daß der Unterdruckanschluß (79) durch Anheben mit dem Unterdruckeinlaß (77) kuppelbar ist.

**42.** Anlage nach einem der Ansprüche 39 bis 41, dadurch gekennzeichnet, daß der Unterdruckanschluß (79) ein Ventil (82) aufweist, das bei mit den Unterdruckeinlaß (77) des Unterdruckbehälters (75) gekuppeltem Unterdruckanschluß (79) geöffnet, sonst aber geschlossen ist.

**Claims**

**1.** Apparatus for making insulating glass plates from at least two sheets of glass (3) curved in at least one direction, especially insulating glass plates for windows of motor vehicles, with a station (III) for applying a plastics strip (2) serving as a spacer, a station (IV) for applying a sealant (29) parallel to the spacer (2), this station being combined with the previously cited station (III) if desired, a station (V) for assembly, a station (VI) for pressing together the assembled pack of sheets, and a conveyor device for transport of the sheets of glass (3), preferably stepwise, through the stations (I to VI) of the apparatus, the conveyor device comprising a plurality of movable carriers (5), especially on rails, for the sheets of glass (3), which carriers are curved approximately in the shape of the sheets of glass (3) on their sides facing the sheets of glass (3) and are equipped with devices (6, 7) for holding the sheets of glass (3).

**2.** Apparatus according to claim 1, characterized in that the carriers (5) are smaller that the sheets of glass (3) held thereby, so that the sheet of glass (3) projects beyond the edge of its carrier (5).

3. Apparatus according to claim 1 or 2, characterized in that the carriers (5) are fitted with vacuum devices (6, 7) for holding the sheets of glass (3) thereon.

4. Apparatus according to any one of claims 1 to 3, characterized in that, before the station (III) for applying the spacer (2), a station (I, II) is provided wherein the sheets of glass (3) coming from a washing machine (32) are placed on a carrier (5) of the conveyor device and fixed in alignment thereon.

5. Apparatus according to claim 4, characterized in that the station (II) is fitted with at least three, preferably more than three positioning rams (38), which align the sheet of glass (3) relative to the carrier (5), before it is fixed on the carrier (5).

6. Apparatus according to any one of claims 1 to 5, characterized in that at least two stops (50) are provided for accurately aligned holding of the sheets of glass (3) are provided in the station (III) for applying the spacer (2), which preferably consists of butyl rubber, optionally with a hygroscopic additive.

7. Apparatus according to claim 6, characterized in that the nozzle (18) for applying the spacer (2) is held on a carriage (46), which is adjustable (arrow 47) along a gantry (45) movable transversely (arrow 44) relative to its longitudinal extent.

8. Apparatus according to claim 7, characterized in that the nozzle (18) is movable with a plurality of degrees of freedom, wherein the degrees of freedom are movability of the gantry (45) (arrow 44), adjustability of the carriage (46) along the gantry (45) (arrow 47), rotation of the nozzle (18) about an axis (12) perpendicular to the glass surface (23) (arrow 48), adjustability of the holder (17) of the nozzle (18) perpendicular to the axis (12) (coarse adjustment - arrow 16) and adjustability of the nozzle (18) relative to the holder (17) (fine adjustment - arrow 20).

9. Apparatus according to claim 8, characterized in that a device for measuring the spacing between the holder (17) of the nozzle (18) and the surface (23) of the sheet of glass (3) is provided in advance - regarded in the direction of movement (arrow 4) - of the nozzle (18), for example a sensing finger (19) bearing on the surface (23) of the sheet of glass (3), which so controls the drive (21, 22) for the adjustment of the nozzle (18) perpendicular to the surface (23) of the sheet of glass (3) that, during the application of the spacer (2), the spacing of the nozzle (18) from the surface (23) on which the spacer (2) is to be applied has a predetermined, constant value.

10. Apparatus according to claim 9, characterized in that the nozzle (18) is shaped to apply a strip (2) of rectangular cross-section to the edge of the sheet of glass (3).

11. Apparatus according to claim 9 or 10, characterized in that the sensing finger (19) carries a roller (24) bearing on the surface (23) of the sheet of glass (3) on its end facing the surface (23).

12. Apparatus according to any one of claims 8 to 11, characterized in that the two independent drives (14, 15) are provided for the adjustment of the nozzle (18) perpendicular to the surface (23) of the sheet of glass (3), in that a first drive is a drive known per se for moving the nozzle (18) up in front of the surface (23) of the sheet of glass (3), and in that the second drive (21, 22) is operatively connected to the measuring device, e.g. to the sensing finger (19).

13. Apparatus according to claim 12, characterized in that the measuring device, e.g. the sensing finger (19) is carried by the holder (17) of the nozzle (18) adjustable by the first drive (14, 15), and in that its signals, which correspond to the distance between the holder (17) and the surface (23) of the sheet of glass (3) or to changes in this distance, are applied to the second drive (21, 22) for the adjustment of the nozzle (18).

14. Apparatus according to any one of claims 1 to 13, characterized in that, in the station (IV) for applying a sealant (29), there is provided a nozzle (18′) for injecting sealant movable parallel to the spacer (2) and - relative to the sheet of glass (3) - outside the spacer (2), and in that the nozzle (18′) for applying the sealant (29) is held on a carriage (46′) which is adjustable (arrow 47′) along a gantry (45) movable transversely (arrow 44′) relative to its longitudinal extent.

15. Apparatus according to claim 14, characterized in that the a device for measuring the spacing between the holder of the nozzle (18′) and the surface (23) of the sheet of glass (3) is provided in advance - regarded in the direction of movement (arrow 4) - of the nozzle (18), for example a sensing finger (19) bearing on the surface (23) of the sheet of glass (3), which so controls the drive (21, 22) for the adjustment of the nozzle (18′) perpendicular (arrow 20) to surface (23) of the sheet of glass (3) that, during the application of the sealant (29), the spacing of the nozzle (18') from the surface (23) on which the sealant (29) is to be applied has a predetermined, constant value.

16. Apparatus according to claim 15, characterized in that the nozzle (18') is shaped to apply a strip (29) of substantially rectangular cross-section to the edge region (42) of the sheet of glass (3).

17. Apparatus according to claim 17, characterized in that the sensing finger (19) carries a roller (24) at its end bearing on the surface (23) of the sheet of glass (3).

18. Apparatus according to claim 17, characterized in that two independent drives (14, 15; 21, 22) are provided for the adjustment of the nozzle (18') perpendicular (arrow 20) to the surface (23) of the sheet of glass (3), in that a first drive (14, 15) is a drive known per se for moving the nozzle (18') up in front of the surface (23) of the sheet of glass (3), and in that the second drive (21, 22) is operatively connected to the measuring device, e.g. with the sensing finger.

19. Apparatus according to claim 18, characterized in that the measuring device, e.g. the sensing finger (19) is carried by the holder (17) of the nozzle (18') adjustable by the first drive (14, 15), and in that its signals, which correspond to the distance between the holder (17) and the surface (23) of the sheet of glass (3) or to changes in this distance, are applied to the second drive (21, 22) for the adjustment of the nozzle (18').

20. Apparatus according to any one of claims 1 to 19, characterized in that the nozzle (18') for applying the sealant (29) to the sheet of glass (3) is combined with the nozzle ( 18) for injecting the spacer (2) in a double nozzle.

21. Apparatus according to claim 20, characterized in that the nozzle (18) for injecting the spacer (2) and/or the nozzle (18') for injecting the sealant (29) are shaped to produce strips with rectangular cross-sectional shape, the strip (2) which forms the spacer being thicker that the strip (29) of sealant.

22. Apparatus according to any one of claims 1 to 21, characterized in that, in the station (V) for assembling two sheets of glass (3) into a pack of sheets, i.e. for placing one sheet of glass (3) on the sheet of glass (3) fixed on the carrier (5) and provided with the two plastics strips (2, 29), there is provided a gripper (51, 52, 53) which receives the sheet of glass (3) to be placed, e.g. from a stack of sheets of glass (3) and puts it on the strips (2, 29), and in that, after releasing the gripper (51, 52, 53) from the sheet of glass (3) aligning rams (56) are provided to advance from the outside and shift the applied sheet of glass (3) into a position overlapping the fixed sheet of glass (3).

23. Apparatus according to claim 22, characterized in that the aligning rams (56) preferably advance simultaneously into abutment with the sheet of glass (3) fixed on the carrier (5).

24. Apparatus according to claim 22 or 23, characterized in that the aligning rams (56) are controlled by stored data for the outline shape of the sheet of glass (3) determined in the glass cutting device with which the sheet of glass (3) is made.

25. Apparatus according to any one of claims 1 to 24, characterized in that, in the station (VI) for pressing the pack of sheets there is provided a tool (60) movable along the edge (42) of the sheets of glass (3) of the pack of sheets, with at least two opposed pressure rollers (66) adapted to be biased towards each other and be applied to the two sides of the pack of sheets.

26. Apparatus according to claim 25, characterized in that the tool (60) is mounted on a carriage (61), which is guided for adjustment along a gantry (63) movable transversely relative to its longitudinal extent.

27. Apparatus according to claim 25 or 26, characterized in that the pressure rollers (66) are rotatable (arrow 69) on the carriage (61) about an axis (68) approximately perpendicular to the edge region (42) of the sheets of glass (3).

28. Apparatus according to claim 5, characterized in that the positioning rams (36) for aligning the sheet of glass (3) placed on the carrier (5) are controlled by stored data for the outline shape of the sheet of glass (3) determined in the glass cutting device with which the sheet of glass (3) is made.

29. Apparatus according to any one of claims 1 to 28, characterized in that the movements of the nozzle (18) for application of the spacer (2), of the nozzle (18') for application of the strip (29) of sealant and/or of the pressure tool (60) are controlled by stored data for the outline shape of the sheet of glass (3) determined in the glass cutting device with which the sheet of glass (3) is made.

30. Apparatus according to claim 4, characterized in that, in station (I) there is provided a placement device (34) which has a gripper which grips a sheet of glass (3) coming from a washing machine (32) and lays it on a carrier (5), optionally swinging it about an approximately horizontal axis, (Figure 1).

31. Apparatus according to claim 30, characterized in that the gripper is fitted with suction heads.

32. Apparatus according to claim 30, characterized in that the gripper is fitted with at least two hook-shaped retaining members (35) which can be applied to mutually opposite edges of the sheet of glass (3).

33. Apparatus according to claim 4, characterized in that, in station (I), the carrier (5) can be tilted into a position with a substantially vertical support face and in that a sheet of glass (3) which comes from a washing machine (32) is fixed to the carrier (5) which is tilted into the position with the substantially vertical support surface, (Figure 1').

34. Apparatus according to any one of claims 1 to 19, characterized in that the nozzle (18') for applying the strip (29) of sealant is mounted on a carriage (46') adjustable along the beam (45) on which the carriage (46) carrying the nozzle (18) for applying the spacer (2) is guided.

35. Apparatus according to claim 1, any one of claims 14 to 21 or 35, characterized in that, in the station (IV) for applying the strip (29) of sealant, at least two stops (50') are provided for precisely aligned retention of the sheet of glass (3).

36. Apparatus according to claim 6, 25 or 35, characterized in that the stops (50, 50') cooperate with the carrier (5) or counter-stops fitted thereon, and/or with the sheet of glass (3) fixed on the carrier (5).

37. Apparatus according to claim 14, characterized in that the nozzle (18) is movable with a plurality of degrees of freedom, wherein the degrees of freedom are movability of the gantry (45) (arrow 44), adjustability of the carriage (46) along the gantry (45) (arrow 47), rotation of the nozzle (18) about an axis (12) perpendicular to the glass surface (23) (arrow 48), adjustability of the holder (17) of the nozzle (18) in the axis (12) perpendicular to the glass surface (23) (coarse adjustment - arrow 16) and adjustability of the nozzle (18) relative to the holder (17) (fine adjustment - arrow 20).

38. Apparatus according to claim 16, characterized in that the nozzle (18) for applying a strip (2) or the outlet opening (28) is formed with a convexly curved upper side (28').

39. Apparatus according to any one of claims 3 to 38, characterized in that the carrier (5) is fitted with a vacuum reservoir (75), in that vacuum connections (79) are provided at least in the some stations (II to VI) and can be coupled to a vacuum inlet (77) arranged on the vacuum reservoir (75).

40. Apparatus according to claim 40, characterized in that a non-return valve (78) is associated with the vacuum inlet (77).

41. Apparatus according to claim 39 or 40, characterized in that the vacuum connection (79) can be coupled to the vacuum inlet (77) by elevating it.

42. Apparatus according to any one of claims 39 to 41, characterized in that the vacuum connection (79) has a valve (82) which opens with the vacuum connection (79) coupled to the vacuum inlet (77) of the vacuum reservoir (75), but is otherwise closed.

## Revendications

1. Installation de fabrication de vitres isolantes à partir d'au moins deux plaques de verre (3) courbées dans au moins une direction, en particulier de vitres isolantes pour des baies et autres ouvertures de véhicules automobiles, comprenant un poste (III) pour appliquer un boudin en matière plastique (2) servant d'intercalaire, un poste (IV) pour appliquer un matériau d'étanchéité (29) parallèlement à l'intercalaire (2), poste qui est éventuellement combiné avec le poste (III) mentionné précédemment, un poste (V) pour l'assemblage, un poste (VI) pour comprimer le paquet de plaques assemblées et un dispositif de transport pour transporter de préférence en cadence les plaques de verre (3) à travers les postes (I à VI) de l'installation, dispositif de transport qui présente plusieurs supports (5) pour les plaques de verre (3) qui peuvent être déplacés de préférence sur des rails, dont la surface d'appui tournée vers la plaque de verre (3) est courbée approximativement comme la plaque de verre (3) et qui sont équipés de dispositifs (6, 7) de fixation de la plaque de verre (3).

2. Installation selon la revendication 1, caractérisée en ce que les supports (5) sont plus petits que les plaques de verre (3) qu'ils maintiennent si bien que la plaque de verre (3) dépasse du bord du support (5).

3. Installation selon la revendication 1 ou 2, caractérisée en ce que les supports (5) sont équipés de dispositifs à vide (6, 7) pour fixer les plaques de verre (3) sur lesdits supports.

4. Installation selon l'une des revendications 1 à 3, caractérisée en ce qu'il est prévu en amont du poste (III) pour appliquer l'intercalaire (2), un poste (I, II) dans lequel des plaques de verre (3) en provenance d'une machine de lavage (32) sont mises en place sur un support (5) du dispositif de transport et y sont fixées après positionnement.

5. Installation selon la revendication 4, caractérisée en ce que le poste (II) est équipé d'au moins trois, et de préférence de plus de trois barres coulissantes de positionnement (38) qui ajustent la plaque de verre (3) par rapport au support (5) avant qu'elle soit fixée sur le support (5).

6. Installation selon l'une des revendications 1 à 5, caractérisée en ce qu'au moins deux butées (50) destinées à arrêter la plaque de verre (3) en position exacte sont prévues dans le poste (III) d'application de l'intercalaire (2), lequel intercalaire est de préférence en butyl auquel sont éventuellement additionnées des substances hygroscopiques.

7. Installation selon la revendication 6, caractérisée en ce que la buse (18) pour appliquer l'intercalaire (2) est montée sur un chariot (46) qui peut être déplacé (flèche 47) le long d'un pont (45) mobile perpendiculairement (flèche 44) à sa direction longitudinale.

8. Installation selon la revendication 7, caractérisée en ce que la buse (18) possède plusieurs degrés de liberté, les degrés de liberté étant la mobilité en translation (flèche 44) du pont (45), la mobilité (flèche 47) du chariot (46) le long du pont (45), la rotation (flèche 48) de la buse (18) autour d'un axe (12) perpendiculaire à la surface du verre (23), la mobilité (flèche 16) du support (17) de la buse (18) perpendiculairement à l'axe (12) (réglage grossier) et la mobilité (flèche 20) de la buse (18) par rapport à son support (17) (réglage précis).

9. Installation selon la revendication 8, caractérisée en ce qu'il est prévu en amont de la buse (18), vu dans le sens de déplacement (flèche 4), un dispositif pour mesurer la distance entre le support (17) de la buse (18) et la surface (23) de la plaque de verre (3), par exemple un palpeur (19) prenant appui sur la surface (23) de la plaque de verre (3), qui commande le dispositif d'entraînement (21, 22) destiné à déplacer la buse (18) perpendiculairement à la surface (23) de la plaque de verre (3) de manière telle que pendant l'anplication de l'intercalaire (2), la distance entre la buse (18) et la surface (23) sur laquelle doit être appliqué l'intercalaire (2), ait une valeur prédéterminée constante.

10. Installation selon la revendication 9, caractérisée en ce que la buse (18) pour appliquer un boudin (2) de section transversale rectangulaire est agencée sur le bord de la plaque de verre (3).

11. Installation selon la revendication 9 ou 10, caractérisée en ce que le palpeur (19) porte à son extrémité tournée vers la surface (23) de la plaque de verre (3) un galet (24) prenant appui sur la surface (23).

12. Installation selon l'une des revendications 8 à 11, caractérisée en ce que deux dispositifs d'entraînement (14, 15) indépendants l'un de l'autre sont prévus pour déplacer la buse (18) perpendiculairement à la surface (23) de la plaque de verre (3), en ce qu'un premier dispositif d'entraînement est un dispositif connu pour avancer la buse (18) jusqu'à la surface (23) de la plaque de verre (3) et en ce que le deuxième dispositif d'entraînement (21, 22) est relié activement au dispositif de mesure, par exemple au palpeur (19).

13. Installation selon la revendication 12, caractérisée en ce que le dispositif de mesure, par exemple le palpeur (19), est porté par le support (17) de la buse (18) pouvant être déplacé par le premier dispositif d'entraînement (14, 15) et en ce que ses signaux qui correspondent à la distance entre le support (17) et la surface (23) de la plaque de verre (3) ou à des variations de cette distance, sont délivrés au deuxième dispositif d'entraînement (21, 22) pour le déplacement de la buse (18).

14. Installation selon l'une des revendications 1 à 13, caractérisée en ce que dans le poste (IV) pour appliquer le matériau d'étanchéité (29), une buse (18') destinée à appliquer le matériau d'étanchéité (29) qui peut être déplacée parallèlement à l'intercalaire (2) et, par rapport à la plaque de verre (3), à l'extérieur de l'intercalaire (2) est montée sur un chariot (46') qui peut être déplacé (flèche 47') le long d'un pont (45) mobile perpendiculairement (flèche 44') à sa direction longitudinale.

15. Installation selon la revendication 14, caractérisée en ce qu'il est prévu en amont de la buse (18'), vu dans le sens de déplacement (4), un dispositif pour mesurer la distance entre le support de la buse (18') et la surface (23) de la plaque de verre (3), par exemple un palpeur (19) prenant appui sur la surface (23) de la plaque de verre (3), qui commande le dispositif d'entraînement (21, 22) destiné à déplacer la buse (18') perpendiculairement (flèche 20) à la surface (23) de la plaque de verre (3) de manière telle que pendant l'application du matériau d'étanchéité (29), la distance entre la buse (18') et la surface (23) sur laquelle doit être appliqué le matériau d'étanchéité (29), ait une valeur prédéterminée constante.

16. Installation selon la revendication 15, caractérisée en ce que la buse (18') pour appliquer un boudin (29) de section transversale sensiblement rectangulaire est agencée sur le bord (42) de la plaque de verre (3).

17. Installation selon la revendication 16, caractérisée en ce que le palpeur (19) porte un galet (24) à son extrémité prenant appui sur la surface (23) de la plaque de verre (3).

18. Installation selon la revendication 17, caractérisée en ce que deux dispositifs d'entraînement (14, 15 ; 21, 22) indépendants l'un de l'autre sont prévus pour déplacer la buse (18') perpendiculairement (flèche 20) à la surface (23) de la plaque de verre (3), en ce qu'un premier dispositif d'entraînement (14, 15) est un dispositif connu pour avancer la buse (18') jusqu'à la surface (23) de la plaque de verre (3) et en ce que le deuxième dispositif d'entraînement (21, 22) est relié activement au dispositif de mesure, par exemple au palpeur.

19. Installation selon la revendication 18, caractérisée en ce que le dispositif de mesure, par exemple le palpeur (19), est porté par le support (17) de la buse (18') pouvant être déplacé par le premier dispositif d'entraînement (14, 15) et en ce que ses signaux qui correspondent à la distance entre le support (17) et la surface (23) de la plaque de verre (3) ou à des variations de cette distance, sont délivrés au deuxième dispositif d'entraînement (21, 22) pour le déplacement de la buse (18').

20. Installation selon l'une des revendications 1 à 19, caractérisée en ce que la buse (18') pour appliquer le matériau d'étanchéité (29) sur la plaque de verre (3) est combinée avec la buse (18) pour appliquer l'intercalaire (2) pour former une buse double.

21. Installation selon la revendication 20, caractérisée en ce que la buse (18) pour l'application de l'intercalaire (2) et/ou la buse (18') pour l'application du boudin de matériau d'étanchéité (29) sont agencées pour former des boudins de section transversale rectangulaire, le boudin (2) qui forme l'intercalaire étant plus épais que le boudin (29) de matériau d'étanchéité.

22. Installation selon l'une des revendications 1 à 21, caractérisée en ce que dans le poste (V) pour assembler deux plaques de verre (3) en un paquet de plaques, c'est-à-dire pour poser une plaque de verre (3) sur la plaque de verre (3) fixée sur le support (5) et munie des deux boudins en matière plastique (2, 29), il est prévu un dispositif de préhension (51, 52, 53) qui prend la plaque de verre (3) à poser, par exemple dans une pile de plaques de verre (3) et la dépose sur les boudins (2, 29) et en ce que après le détachement du dispositif de préhension (51, 52, 53) de la plque de verre (3), il est prévu des barres coulissantes d'ajustement (56) qui peuvent être avancées de l'extérieur vers la plaque de verre (3) et permettent de déplacer la plaque de verre (3) posée dans une position où elle coïncide avec la plaque de verre (3) fixée.

23. Installation selon la revendication 22, caractérisée en ce que les barres coulissantes d'ajustement (56) peuvent être avancées de préférence simultanément jusqu'en appui sur la plaque de verre (3) fixée sur le support (5).

24. Installation selon la revendication 22 ou 23, caractérisée en ce que les barres coulissantes d'ajustement (56) sont commandées en exploitant des données relatives au profil de la plaque de verre (3) qui sont mémorisées dans le dispositif de découpe du verre avec lequel la plaque de verre (3) a été fabriquée.

25. Installation selon l'une des revendications 1 à 24, caractérisée en ce que dans le poste (VI) pour comprimer le paquet de plaques, il est prévu un outil (60) qui peut être déplacé le long du bord (42) des plaques de verre (3) du paquet de plaques et est muni d'au moins deux galets-presseurs (66) qui se font face, peuvent être sollicités l'un vers l'autre et prendre appui des deux côtés sur le paquet de plaques.

26. Installation selon la revendication 25, caractérisée en ce que l'outil (60) est monté sur un chariot (61) qui est guidé mobile sur un pont (63) pouvant être déplacé perpendiculairement à sa direction longitudinale.

27. Installation selon la revendication 25 ou 26, caractérisée en ce que les galets-presseurs (66) sont montés sur le chariot (61) avec possibilité de rottion (flèche 69) autour d'un axe (68) à peu près perpendiculaire au bord (42) des plaques de verre (3).

28. Installation selon la revendication 5, caractérisée en ce que les barres coulissantes de positionnement (38) pour ajuster la plaque de verre (3) posée sur le support (5) sont commandées en exploitant des données relatives au profil de la plaque de verre (3) qui sont mémorisées dans le dispositif de découpe du verre avec lequel la plaque de verre (3) a été fabriquée.

29. Installation selon l'une des revendications 1 à 28, caractérisée en ce que les déplacements de la buse (18) pour appliquer l'intercalaire (2), de la buse (18') pour appliquer le boudin (29) en matériau d'étanchéité et/ou de l'outil de compression (60) sont commandés en exploitant des données relatives au profil de la plaque de verre (3) qui sont mémorisées dans le dispositif de découpe du verre avec lequel la plaque de verre (3) a été fabriquée.

30. Installation selon la revendication 4, caractérisée en ce qu'il est prévu dans le poste (I) un dispositif de mise en place (4) qui possède un dispositif de préhension qui saisit les plaques de verre (3) en provenance d'une machine de lavage (32) et les dépose sur un support (5) éventuellement avec pivotement autour d'un axe à peu près horizontal (fig. 1).

31. Installation selon la revendication 30, caractérisée en ce que le dispositif de préhension est équipé de ventouses.

32. Installation selon la revendication 30, caractérisée en ce que le dispositif de préhension est équipé d'au moins deux organes de maintien (35) en forme de crochet pouvant être appliquées sur des bords opposés de la plaque de verre (3).

33. Installation selon la revendication 4, caractérisée en ce que dans le poste (I), le support (5) peut basculer dans une position où sa surface d'appui est sensiblement verticale et en ce qu'une plaque de verre (3) qui arrive d'une machine de lavage (32), est fixée sur le support (5) qui est basculé dans la position où sa surface d'appui est sensiblement verticale (fig. 1').

34. Installation selon l'une des revendications 1 à 19, caractérisée en ce que la buse (18') pour appliquer le boudin (29) en matériau d'étanchéité est montée sur un chariot (46') mobile le long de la poutre (45) sur laquelle est guidé le chariot (46) portant la buse (18) pour appliquer l'intercalaire (2).

35. Installation selon la revendication 1, l'une des revendications 14 à 21 ou 35, caractérisée en ce qu'au moins deux butées (50') destinées à arrêter la plaque de verre (3) en position exacte sont prévues dans le poste (IV) pour appliquer le boudin (29) en matériau d'étanchéité.

36. Installation selon la revendication 6, 25 ou 35, caractérisée en ce que les butées (50, 50') coopèrent avec le support (5), c'est-à-dire avec des contre-butées montées sur ce dernier et/ou avec la plaque de verre (3) fixée sur le support (5).

37. Installation selon la revendication 14, caractérisée en ce que la buse (18) possède plusieurs degrés de liberté, les degrés de liberté étant la mobilité en translation (flèche 44) du pont (45), la mobilité (flèche 47) du chariot (46) le long du pont (45), la rotation (flèche 48) de la buse (18) autour d'un axe (12) perpendiculaire à la surface du verre (23), la mobilité (flèche 16) du support (17) de la buse (18) suivant un axe (12) perpendiculaire à la surface du verre (23) (réglage grossier) et la mobilité (flèche 20) de la buse (18) par rapport à son support (17) (réglage précis).

38. Installation selon la revendication 16, caractérisée en ce que la buse (18) pour appliquer un boudin (2) et l'orifice de sortie (28) sont réaliés avec un côté supérieur (28') à courbure convexe.

39. Installation selon l'une des revendications 3 à 38, caractérisée en ce que le support (5) est équipé d'un réservoir à pression négative (75), en ce que dans certains postes (II à VI) au moins des raccords (79) sont prévus qui peuvent être couplés à une entrée (77) disposée sur le réservoir à pression négative (75).

40. Installation selon la revendication 39, caractérisée en ce qu'un clapet antiretour (78) est associé à l'entrée de pression négative (77).

41. Installation selon la revendication 39 ou 40, caractérisée en ce que le raccord de pression négative (79) peut être couplé à l'entrée de pression négative (77) par soulèvement.

42. Installation selon l'une des revendications 39 à 41, caractérisée en ce que le raccord de pression négative (79) présente un clapet (82) qui s'ouvre lorsque le raccord (79) est couplé à l'entrée (77) du réservoir à pression négative (75) mais est sinon fermé.

FIG.1

FIG. 2

EP 0 437 418 B1

FIG.3

FIG. 1'

FIG. 3'

FIG. 4

EP 0 437 418 B1

FIG.5

FIG.6

24

FIG. 7

FIG. 8

EP 0 437 418 B1